(19) **Europäisches Patentamt European Patent Office Office européen des brevets**

(11) **EP 3 817 177 B1**

(12) **EUROPEAN PATENT SPECIFICATION**

(45) Date of publication and mention of the grant of the patent:
**13.03.2024 Bulletin 2024/11**

(21) Application number: **19915586.2**

(22) Date of filing: **30.07.2019**

(51) International Patent Classification (IPC):
$H02J\ 1/10^{(2006.01)}$    $H02M\ 1/00^{(2006.01)}$
$G06F\ 17/13^{(2006.01)}$    $H02J\ 3/02^{(2006.01)}$
$H02J\ 3/38^{(2006.01)}$    $H02M\ 5/458^{(2006.01)}$
$H02M\ 3/335^{(2006.01)}$

(52) Cooperative Patent Classification (CPC):
**H02J 1/106; G06F 17/13; H02M 1/007; H02M 1/008; H02M 5/4585;** H02J 3/02; H02J 3/381; H02J 2203/20; H02J 2300/24; H02J 2300/28; H02M 3/33573; Y02E 10/56

(86) International application number:
**PCT/CN2019/098302**

(87) International publication number:
**WO 2021/012298 (28.01.2021 Gazette 2021/04)**

(54) **SELF-MUTUAL-GROUP MULTI-LEVEL STABILITY IDENTIFICATION AND STABILITY RECOVERY METHOD FOR MULTI-PORT ENERGY ROUTER**

MEHRSTUFIGE STABILITÄTSIDENTIFIZIERUNG UND STABILITÄTSWIEDERHERSTELLUNGSVERFAHREN FÜR MULTIPORT-ENERGIEROUTER

PROCÉDÉ D'AUTO-IDENTIFICATION DE STABILITÉ MUTUELLE MULTI-NIVEAU DE GROUPE ET DE RÉCUPÉRATION DE STABILITÉ POUR ROUTEUR D'ÉNERGIE MULTIPORT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.07.2019 CN 201910674773**

(43) Date of publication of application:
**05.05.2021 Bulletin 2021/18**

(73) Proprietor: **Northeastern University Shenyang, Liaoning 110819 (CN)**

(72) Inventors:
• **SUN, Qiuye**
  **Shenyang, Liaoning 110819 (CN)**
• **WANG, Rui**
  **Shenyang, Liaoning 110819 (CN)**
• **MA, Dazhong**
  **Shenyang, Liaoning 110819 (CN)**
• **HU, Jingwei**
  **Shenyang, Liaoning 110819 (CN)**
• **SUN, Zhenao**
  **Shenyang, Liaoning 110819 (CN)**

(74) Representative: **Gee, Steven William Fairfield IP Limited 1 South Lynn Gardens London Road Shipston on Stour, Warwickshire CV36 4ER (GB)**

(56) References cited:
CN-A- 104 682 430    CN-A- 104 682 430
CN-A- 106 452 136    CN-A- 106 452 136
CN-A- 107 017 638    CN-A- 107 017 638
CN-A- 109 830 995    CN-A- 109 830 995

## Description

BACKGROUND OF THE INVENTION

1. Field of the Invention

The invention relates to the technical field of Energy Internet, in particular to a self-mutual-group multilevel stability identification and stability recovery method for a multi-port energy router.

2. The Prior Arts

Since the twenty-first century, with rapid development of economic society and a power electronic conversion technology, a novel future renewable electric energy delivery and management (FREEDM) system in Energy Internet is proposed by people, and at the same time, a novel energy router becomes a critical component of the FREEDM due to large volume and heavy weight of a traction transformer. The energy router integrates a power electronic technology and a high frequency transformer technology and uses a method combining apower electronic converterand a high frequency isolation transformer, so that compared with a traditional transformer, the energy router has the advantages of voltage drop compensation, power outage compensation, instantaneous voltage regulation, fault isolation, reactive power compensation, isolation of harmonics, new energy access and the like, and is small in volume and light in weight, and modular integration is facilitated. In the future renewable electric energy delivery and management system, the energy router can have an important role in application due to diversified and rich functions. A single energy router includes a front-end DC converter, a bidirectional bridge converter and a back-end AC/DC converter, and people pay more and more attention to an instability phenomenon generated due to mutual influence of the three parts.

In the prior art energy router systems and models are known.

CN109830995 A discloses that the energy router is a three-phase structure. Each phase is composed of an upper bridge arm and a lower bridge arm connected in series by a reactor. Each of the upper and lower bridge arms is formed by connecting the input ends of a plurality of isolating modular converters in series and connecting the output ends of the plurality of isolating modular converters in parallel. The energy router has a basic voltage port at a low-voltage DC side, a basic voltage port at a high-voltage DC side, and a basic voltage port at a high-voltage AC side, and can realize energy interaction between the ports. The energy router is located in a micro grid, and connects the micro grid and a public grid. The energy router includes a new energy power generation device and an energy storage device. The energy router, in an island mode, has an LVDC-HVDC, HVAC mode, a HVDC-LVDC, HVAC mode, and a HVAC-LVDC, HVDC mode. By constructing a system model and determining a control variable, a dual-loop decoupling control strategy based on V/f control is provided. The energy router has the advantages of improving the operating stability and energy utilization efficiency of the system by acquiring the electrical quantity of each port in the energy router in real time and using the constant-frequency and constant-voltage double-loop control strategy.

CN106452136 A discloses a multi-port power electronic converter for energy internet, and belongs to the technical field of power electronic converters. The converter is composed of one static synchronous series compensator, one static synchronous compensator, one DC-DC converter and one three-phase DC-AC inverter. The static synchronous series compensator and the static synchronous compensator are both formed on the basis of a modular multi-level converter. The DC-DC converter is formed by a plurality of isolated DC-DC converters which are subject to input series and output series, and shares a high-voltage DC bus with the static synchronous series compensator and the static synchronous compensator. According to the invention, the converter integrates the functions of a unified power flow controller and the functions of a power electronic transformer, thus having complementary advantages of the unified power flow controller and the power electronic transformer and reducing cost; the converter is modularized, is easy to expand and set with a backup, and has important application potential in future energy internet.

Nowadays, many stability identification methods based on impedance exist and are mainly divided into two types of model impedance stability identification and measured impedance stability identification. According to an impedance stability analyzing method, a system is divided into a stable power supply subsystem and a stable load subsystem, and the stability of the whole system is evaluated through a generalized Nyquist curve. At present, in order to improve the properties of the impedance stability analyzing method, some scholars have proposed relevant discussions. In order to solve an artificial conservatism problem of a Middlebrook criterion, a gain margin and phase margin criterion, an Energy Source Analysis Consortium criterion, an Opposing Argument criterion and a Three-Step Impedance criterion are successively proposed. In order to overcome defects of the generalized Nyquist curve, a generalized inverse Nyquist curve criterion, a Mikhailov criterion and the like are proposed.In order to realize stability analysis of a bidirectional flow system, a Sum Type criterion has been proposed. In addition, some simplified stability criteria such as a G-norm stability criterion, a singular value stability criterion, an infinite-1 norm stability criterion and an infinite norm stability criterion are successively proposed. Therefore, a stability analysis technology based on impedance has inherent advantages when being applied to energy router stability identification.M. Khazraei proposes a method for analyzing stability of an energy router based on an impedance stability analysis technology for the first time, however, a control strategy of an energy router submodule is quite special and is difficult to realize in practical application. Therefore, stability identification of the energy router is still an open-end problem, and multi-layer stability recovery control of a clustered energy router system urgently needs to be proposed.

SUMMARY OF THE INVENTION

In accordance with defects in the prior art, the invention aims to solve the technical problem of providing a self-mutual-group multilevel stability identification and stability recovery method for a multi-port energy router to achieve the purpose of performing stability identification and stability recovery control on an energy router.

In order to solve the technical problem, the self-mutual-group multilevel stability identification and stability recovery method for a multi-port energy router is characterized by comprising the following steps:

step 1: performing system parameter initialization on a single dual energy flow multi-port energy router system to be detected, wherein system parameters comprise a resistance value, an inductance value, a capacitance value, a line impedance and a switching frequency of three sub-systems of a front-end DC converter, a dual active bridge bidirectional DC-DC converter and a back-end AC/DC converter comprising a back-end AC converter and a back-end DC converter in the multi-port energy router of in the energy router system, and parameters of energy storage equipment and photovoltaic equipment at multiple interfaces;

step 2: constructing an Eular-Lagrange mathematical model according to a topology structure of the front-end DC converter, calculating a transfer function according to the mathematical model of the front-end DC converter, further judging the stability of a DC front end of the multi-port energy router system, if the judgment result shows instability, determining that the multi-port energy router system is in self-hierarchy instability, executing step 7, or else, executing step 3;

step 3: constructing an Eular-Lagrange mathematical model according to a topology structure of the dual active bridge bidirectional DC-DC converter, calculating a transfer function according to the mathematical model of the dual active bridge bidirectional DC-DC converter, further judging the stability, if the judgment result shows instability, determining that the multi-port energy router system is in self-hierarchy instability, executing the step 7, or else, executing step 4;

step 4: constructing an Eular-Lagrange mathematical model according to a circuit topology structure of the back-end AC/DC converter, calculating a transfer function according to the mathematical model of the back-end AC/DC converter, judging the stability of the back-end AC/DC converter according to a Nyquist curve of the transfer function, if the judgment result shows instability, determining that the multi-port energy router system is in self-hierarchy instability, executing the step 7, or else, executing step 5;

step 5: after determining that a basic three-level independent sub-system of the single dual energy flow multi-port energy router system is stable through steps 2-4, enabling new energy equipments including a multi-load equipment, an energy storage equipment, a photovoltaic equipment and a fan to be accessed to front and back buses of the dual active bridge bidirectional DC-DC converter, and further determining the single stability of a mutually-coupled single dual energy flow multi-port energy router system;

step 5.1: enabling n pieces of different equipments including the new energy equipments of the multi-load equipment, the energy storage equipment, the photovoltaic equipment and the fan to be in parallel connection to a front end of the dual active bridge bidirectional DC-DC converter, without considering the independent stability of the multi-load equipment and the photovoltaic equipment, independently taking each interface in the multi-port energy router system as a sub-module due to existence of the line impedance and mutual coupling influence of input/output impedance after parallel connection of equipments, wherein the line impedance exists between every two interfaces, enabling the structure of a multi-interface circuit to be equivalent to that of the Thevenin's circuit in image frequency coupling through a generalized bandwidth small-disturbance current injector, and judging system stability through constructing a system whole relationship function matrix extending to a periphery from interfaces, and closed-loop pole positions of the system;

step 5.1.1: enabling the n pieces of equipment to be in parallel connection to a bus at a front end of the front-end DC converter and correspond to n nodes, setting each node to have a power supply and load, and enabling the line impedance to exist between a connection line of any two pieces of equipment, wherein the equipment having output external characteristicof outputting energy outwards is called a source equipment, and the equipment having the output external characteristic of consuming energy is called a load equipment;

step 5.1.2: performing modeling on a multiple parallel connection system of the multi-port energy router by a matrix fractional criterion (MFC) method:

firstly, building a relationship function matrix of the whole multi-port energy router system, further obtaining the closed-loop pole positions of the system so as to judge the stability of the system, and building a relationship function matrix K(s) consisting of n*n relationship functions for the multi-port energy router system consisting of the n pieces of equipments, wherein an element in the $a^{th}$ row and the $b^{th}$ line in the matrix is a relationship function constructed betweenequipment a and equipment b;

step 5.1.3: judging a zero point and a pole corresponding to each node in the K(s) by the MFCmethod, expressing the relationship function matrix as a ratio of two polynomial matrices, setting $N(s)D^{-1}(s)$ and $A^{-1}(s)B(s)$ as respectively to be any right MFC and any left MFC which cannot be simplified in the given relationship function matrix K(s), wherein N(s) expresses an any right MFC numerator part which cannot be simplified of the given relationship function matrix K(s), D(s) expresses an any right denominator part which cannot be simplified of the given relationship function matrix K(s), A(s) expresses an any right MFC denominator part which cannot be simplified of the given relationship function matrix K(s), and B(s) expresses an any right MFC numerator part which cannot be simplified of the given relationship function matrix K(s), and

expressing the zero point and the pole of the K(s) as: the pole of the K(s) is the root of det D(s)=0 or the root of det A(s)=0, and the zero point of the K(s) is an s value enabling the N(s) or the B(s) to be subjected to ranking reduction; and

step 5.1.4: analyzing the equipment at any node k, wherein $k = 1, ...,n$, $V_k$ is a voltage at the node k, $i_{ok}$ is a current output from a front-end DC circuit, $i_{linckj}$ is a current between the node k and a node j, $j = 1, ..., n$ and $j \neq n$, $Z_{loadk}$ is a local load impedance, $i_{loadk}$ is a local load current, $Z_{linekj}$ is a line impedance between the node k and the node j, then an equation describing a local load voltage and the local load current at the node k is:

$$V_k = Z_{loadk} i_{loadk}$$

an equation describing voltage and current between the node k and the node j is:

$$V_k - V_j = Z_{linckj} i_{linckj}$$

wherein $V_j$ is a voltage at the node j;

the current output from the front-end DC circuit at the node k is:

$$i_{ok} = Y_{eqk}(G_k V_k - V_k)$$

wherein $Y_{eqk} = Z_{eqk}^{-1}$ is a line admittance between the node k and the node j, $Z_{eqk}$ is a line impedance between the node k and the node j, and $G_k$ is a proportional coefficient;

the expression of the local load current at the node k is:

$$i_{loadk} = Y_{loadk} V_k$$

wherein $Y_{loadk} = Z_{loadk}^{-1}$ is a load admittance, and $Z_{loadk}$ is a load impedance;

the expression of current flowing from the node k to the node j is:

$$i_{linekj} = Y_{linekj}(V_k - V_j)$$

wherein $Y_{linekj} = Z_{linekj}^{-1}$ is a line admittance between the node k and the node j;

according to a kirchhoff's law, current flowing in the node k is equal to current flowing out of the node k, then

$$i_{ok} = \sum_{j=1, j \neq k}^{n} \left( i_{linekj} + i_{loadk} \right)$$

enabling the above-mentioned formula to be simultaneous, and obtaining equivalent impedance at the node k, as shown in the following formula:

$$Y_k V_k - \sum_{j=1, j\neq k}^{n} (Y_{linekj} V_j) = Y_{eqk} G_k V_k$$

wherein

$$Y_k = Y_{qek} + Y_{loadk} + \sum_{j=1, j\neq k}^{n} Y_{linekj} \; ;$$

extending the pole of the relationship function matrix K(s) to the whole energy routers and an external equipment system for analysis, and combining kirchhoff's formulas at all the nodes to form a matrix form:

$$\begin{bmatrix} i_{o1} \\ i_{o2} \\ \cdots \\ i_{on} \end{bmatrix} = \begin{bmatrix} Y_{eq1} & 0 & \cdots & 0 \\ 0 & Y_{eq2} & \cdots & 0 \\ \cdots & \cdots & \cdots & \cdots \\ 0 & 0 & \cdots & Y_{eqn} \end{bmatrix} \cdot \left( \begin{bmatrix} Z_{eq1} G_{cli1} i_{g1} \\ G_{clv2} V_2 \\ \cdots \\ G_{clvn} V_n \end{bmatrix} - \begin{bmatrix} V_1 \\ V_2 \\ \cdots \\ V_n \end{bmatrix} \right)$$

$$\begin{bmatrix} Y_1 & -Y_{line12} & \cdots & -Y_{line1n} \\ -Y_{line21} & Y_2 & \cdots & -Y_{line2n} \\ \cdots & \cdots & \cdots & \cdots \\ -Y_{linen1} & -Y_{linen2} & \cdots & Y_n \end{bmatrix} \cdot \begin{bmatrix} V_1 \\ V_2 \\ \cdots \\ V_n \end{bmatrix} = \begin{bmatrix} Y_{eq1} & 0 & \cdots & 0 \\ 0 & Y_{eq2} & \cdots & 0 \\ \cdots & \cdots & \cdots & \cdots \\ 0 & 0 & \cdots & Y_{eqn} \end{bmatrix} \cdot \begin{bmatrix} Z_{eq1} G_{cli1} i_{g1} \\ G_{clv2} V_2 \\ \cdots \\ G_{clvn} V_n \end{bmatrix}$$

enabling the two formulas to be simultaneous, and performing simplification:

$$\begin{bmatrix} i_{o1} \\ i_{o2} \\ \cdots \\ i_{on} \end{bmatrix} = (Y_{M2} - Y_{M2} Y_{M1}^{-1} Y_{M2}) \cdot \begin{bmatrix} Z_{eq1} G_{cli1} i_{g1} \\ G_{clv2} V_2 \\ \cdots \\ G_{clvn} V_n \end{bmatrix}$$

wherein

$$Y_{M1} = \begin{bmatrix} Y_1 & -Y_{line12} & \cdots & -Y_{line1n} \\ -Y_{line21} & Y_2 & \cdots & -Y_{line2n} \\ \cdots & \cdots & \cdots & \cdots \\ -Y_{linen1} & -Y_{linen2} & \cdots & Y_n \end{bmatrix}, \quad Y_{M2} = \begin{bmatrix} Y_{eq1} & 0 & \cdots & 0 \\ 0 & Y_{eq2} & \cdots & 0 \\ \cdots & \cdots & \cdots & \cdots \\ 0 & 0 & \cdots & Y_{eqn} \end{bmatrix},$$

$G_{cli}$ expresses a current proportional coefficient, and $G_{clv}$ expresses a voltage proportional coefficient;

with a matrix $Y_{M2} - Y_{M2} Y_{M1}^{-1} Y_{M2}$ as a closed-loop relationship function matrix K(s) of the energy router system, through judging the stability of the K(s) namely the stability of the system, converting the K(s) into a matrix multiplication form,

$$K(s) = Y_{M2} - Y_{M2} Y_{M1}^{-1} Y_{M2} = (Y_{M1} Y_{M2}^{-1})^{-1} (Y_{M1} - Y_{M2})$$

namely

$$A(s) = Y_{M1} Y_{M2}^{-1}, \quad B(s) = Y_{M1} - Y_{M2} \; ;$$

step 5.2: performing relative prime verification on the relationship matrix K(s) by a ranking criterion method, because

$A(s) = Y_{M1} Y_{M2}^{-1}$ and $B(s) = Y_{M1} - Y_{M2}$ are n-order square matrices, the A(s) is a non-singular matrix, a determinant is a polynomial of s, rank[A(s)B(s)]=n, and the left MFC conditions which cannot be simplified are met, obtaining the closed-loop poles of the system through solving a root of $\det(Y_{M1}Y_{M2}^{-1}) = 0$ ; observing the number of the closed-loop poles on a right plane, when the number of the poles is zero, determining that the system is stable, and if the number of the poles is not zero, determining that the system cannot be stable; and besides, judging the position of unstable equipment according to analysis of the position where the pole is zero, if the judgment result shows instability, determining that the multi-port energy router system is in mutual-hierarchy instability, executing the step 7, or else, executing step 6;

step 6: after determining that the mutually-coupled single dual energy flow multi-port energy router system is in single stability through the step 5, judging the stability of a whole clustered dual energy flow multi-port energy router system;

step 6.1: when the system is obtained through a mixed connection of m energy routers, obtaining an output impedance matrix of the clustered energy router system through a generalized bandwidth small-disturbance current injector, and performing denoising processing on the clustered energy router system through the following formula to obtain an admittance matrix flow diagram of the clustered energy router system,

$$Z_{ij'}^* \begin{bmatrix} 1 & TR_{ij'} \\ TG_{ij'} & 1 \end{bmatrix} Z_{ij'}$$

wherein $TR_{ij'}$ and $TG_{ij'}$ are mutual resistance and mutual conductance between the two energy routers, $i' = 1,\cdots,m$, $j' = 1,\cdots,m, i' \neq j'$, through analysis of the two energy routers from different angles, $G_{ij'}$ and $G_{ji'}$, which are obtained, are two groups of Thevenin's equivalent output admittance matrices obtained through analysis of the two energy routers from different angles, $Z_{ij'}$ is an equivalent output impedance matrix from the $i_{th}$ energy router to the $j_{th}$ energy

router, and $Z_{ij'}^*$ is a transposed matrix of $Z_{ij'}$ ;and

step 6.2: according to a relevance and system stability characteristic condition of an admittance matrix, when steps 1-5 determine that the system is in self-hierarchy stability and mutual-hierarchy stability and the following formula does not have right poles:

$$f(m) = \prod_{i',j'=1}^{m} \frac{G_{ij'}G_{ji'}}{G_{ij'} + G_{ji'}}$$

determining that the clustered dual energy flow multi-port energy router system is stable, else, determining that the clustered dual energy flow multi-port energy router system is in group hierarchy instability of the energy routers, executing the step 7, and performing three-layer impedance reshaping of the clustered energy router so that the system is stable; and

step 7: if the clustered single dual energy flow multi-port energy router system is identified in the steps 2-6 to have an instability result, respectively adopting a parameter self-regulation technology, a passive coupling impedance reshaping technology and a source side cascade impedance reshaping technology for instability links at different layers in the steps 2-6 so that the system is stable:

step 7.1: for a phenomenon of self-hierarchy instability of the energy router, according to a principle that the smaller a droop coefficient is, the higher the system stability is, regulating a droop control coefficient in the back-end DC converter of the single energy router through the arc tangent function, as shown in the following formula, and executing the step 1 again;

$$R = R_0 \left[ 1 - k_1 \arctan \left( \frac{R - R_0}{R_0} k_2 \pi + \Gamma + \frac{1}{2} \pi \right) \right]$$

wherein, R expresses the droop coefficient, Ro expresses an initial droop coefficient, $k_1$ and $k_2$ are proportional coefficients, and $\Gamma$ is a shift coefficient;

step 7.2: for the phenomenon of mutual-hierarchy instability of the energy router, controlling power supply side cascade impedance to reduce impedance of the power supply side sub-system to meet stability of the system, enabling the front-end DC converter or the dual active bridge bidirectional DC-DC converter to be equivalent to be a generalized rectifier, wherein an Eular-Largrange model is expressed as:

$$
\begin{bmatrix} L_n & 0 & 0 \\ 0 & L_n & 0 \\ 0 & 0 & 2C_d \end{bmatrix}\begin{bmatrix} \dot{i}_d \\ \dot{i}_q \\ \dot{u}_{dc} \end{bmatrix} + \begin{bmatrix} 0 & -\omega L_n & S_d \\ \omega L_n & 0 & S_q \\ -S_d & -S_q & 0 \end{bmatrix}\begin{bmatrix} i_d \\ i_q \\ u_{dc} \end{bmatrix} + \begin{bmatrix} R_n & 0 & 0 \\ 0 & R_n & 0 \\ 0 & 0 & \dfrac{2}{R_d} \end{bmatrix}\begin{bmatrix} i_d \\ i_q \\ u_{dc} \end{bmatrix} = \begin{bmatrix} u_d \\ u_q \\ 0 \end{bmatrix}
$$

wherein $L_n$, $R_n$, $C_d$, $R_d$ are respectively equivalent inductance and resistance of the front end of the generalized rectifier, and equivalent inductance and resistance of the back end of the generalized rectifier, $u_{dc}$, $i_d$, $i_q$ are respectively DC front-end voltage and dq axial current of the generalized rectifier, $u_d$, $u_q$ are respectively dq axial voltage of an output side of the rectifier, $S_d$ and $S_q$ respectively express switching duty cycles under a d-q coordinate system, and $\omega$ expresses an angular velocity of the multi-port energy router system;
simplifying the above formula as:

$$
M\dot{x} + Jx + Rx = u
$$

wherein,
$$
M = \begin{bmatrix} L_n & 0 & 0 \\ 0 & L_n & 0 \\ 0 & 0 & 2C_d \end{bmatrix}, \quad J = \begin{bmatrix} 0 & -\omega L_n & S_d \\ \omega L_n & 0 & S_q \\ -S_d & -S_q & 0 \end{bmatrix}, \quad R = \begin{bmatrix} R_n & 0 & 0 \\ 0 & R_n & 0 \\ 0 & 0 & \dfrac{2}{R_d} \end{bmatrix} \quad \text{and}
$$

$$
x = \begin{bmatrix} i_d \\ i_q \\ u_{dc} \end{bmatrix}, u = \begin{bmatrix} u_d \\ u_q \\ 0 \end{bmatrix}
$$
respectively express state variable and terminal control of the multi-port energy router system;
expressing the ideal state variable of the multi-port energy router system as:

$$
x_{ref} = \begin{bmatrix} x_{ref1}, x_{ref2}, x_{ref3} \end{bmatrix} = \begin{bmatrix} \dfrac{1}{2}\left[ \dfrac{U_m}{R_n} - \sqrt{\left(\dfrac{U_m}{R_n}\right)^2 - \dfrac{8u_{dc}^2}{R_d R_n}} \right], 0, u_{dc} \end{bmatrix}
$$

wherein, $u_{dc}$ expresses a DC side voltage of the multi-port energy router system, $x_{ref}$ is an ideal state variable, and $U_m$ is a largest output voltage of the generalized rectifier;
constructing an energy function of a state variable error $x_e = x_{ref} - x$ as:

$$
H_e = \frac{1}{2}x_e^T M x_e
$$

therefore, rewriting the Eular-Largrange model of the generalized rectifier as:

$$
M\dot{x}_e + Rx_e = -u + Jx + M\dot{x}_e + Rx_{ref} + M\dot{x}_{ref}
$$

to guarantee that errors of the multi-port energy router system consistently converge to 0 finally, introducing a damping injection factor as shown in the following formula:

$$R_d x_e = \left( R + R_p \right) x_e$$

wherein, $R_p$ expresses a damping injection factor which is a symmetric positive definite damping matrix, namely

$$R_p = \begin{bmatrix} r_{p1} & & \\ & r_{p1} & \\ & & \dfrac{2}{r_{p3}} \end{bmatrix}$$

wherein, $r_{p1}$-$r_{p3}$ all express a virtual injection resistance;

through regulating $R_p$, guaranteeing a Lyapunov direct stability criterion, obtaining a mutual-hierarchy stability recovery control strategy of the energy routers; and after the passive coupling impedance reshaping technology is adopted, executing step 5 again; and

step 7.3: for a phenomenon of group-hierarchy instability of the energy routers, realizing system stability through enlarging a power supply side output admittance matrix namely reducing an output impedance value in a Thevenin's equivalent circuit, and under the circumstance that the single energy router is stable, enabling the clustered energy router to only induce a low frequency oscillation and a synchronous instability but not a whole frequency domain instability due to mutual coupling, so that designed virtual impedance adopts an impedance reshaping technology in a specific frequency domain, and the specific expression is shown as the following formula:

$$Z_{vir} = \frac{-2K\left(2\pi f_{lo}\right)s}{s^2 + 2\left(2\pi f_{lo}\right)s + \left(2\pi f_{on}\right)^2}$$

($f_{on}$ - $f_{lo}$, $f_{on}$ + $f_{lo}$) expresses an instability frequency range, $K$ expresses an attenuation coefficient, $Z_{vir}$ expresses a virtual impedance, $f_{lo}$ expresses a lower frequency limit, $f_{on}$ expresses an upper frequency limit, and s expresses a Laplace multiplier; and

after the source side cascade impedance reshaping technology is adopted, executing the step 6 again.

After adopting the technical solution, the self-mutual-group multilevel stability identification and stability recovery method for a multi-port energy router provided by the invention has the beneficial effects that the problem of complex stability evaluation of the clustered energy router is fundamentally solved, through a self-hierarchy stability identification technology, assumed conditions for the stability of each sub-module through a traditional impedance technology are eliminated, the coupling stability problem of multi-level power conversion devices is solved through a mutual-hierarchy stability identification technology, sufficient and necessary conditions for stability of a complex energy router network are obtained through a group-hierarchy stability identification technology finally, and the development of the Energy Internet is effectively promoted. For the stability problem of each hierarchy, a three-layer impedance reshaping stability recovery control strategy is proposed so as to guarantee the whole stability of the Energy Internet system and realize expandability, plug and play properties and safe and stable operation of the system.

BRIEF DESCRIPTION OF THE DRAWINGS

FIG. 1 shows the structural diagram of a single dual energy flow multi-port energy router system provided by the embodiment of the invention;
FIG. 2 shows the flow chart of a self-mutual-group multilevel stability identification and stability recovery method for a multi-port energy router provided by the embodiment of the invention;
FIG. 3 shows the topology and control block diagram of the single dual energy flow multi-port energy router system provided by the embodiment of the invention;
FIG. 4 shows the effect diagram of phase shifting control of a bidirectional bridge circuit in an energy router provided by the embodiment of the invention;

FIG. 5 shows the schematic diagram of multiple nodes of the energy router provided by the embodiment of the invention;

FIG. 6 shows the equivalent circuit diagram of multiple nodes of the energy router provided by the embodiment of the invention;

FIG. 7 shows an equivalent diagram of a node k in the energy router provided by the embodiment of the invention;

FIG. 8 shows the topology connection diagram of a clustered energy router provided by the embodiment of the invention;

FIG. 9 shows the block diagram of passive coupling impedance reshaping control provided by the embodiment of the invention; and

FIG. 10 shows the block diagram of source side cascade impedance reshaping control provided by the embodiment of the invention.

DETAILED DESCRIPTIONOF THE PREFERRED EMBODIMENT

The detailed description in the invention will be further described in details with reference to appended drawings and embodiments. The following embodiments are used to illustrate the invention, but not to limit the scope of the invention.

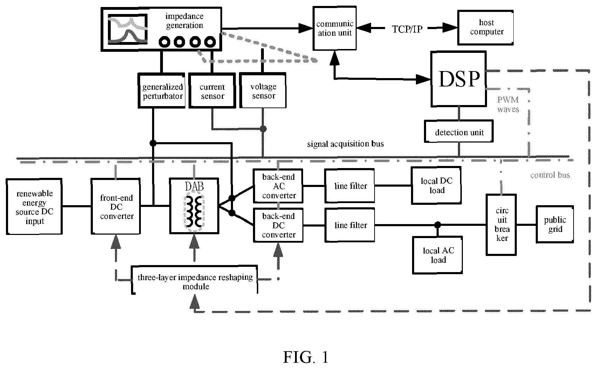

In the embodiment, a multi-port energy router system as shown in FIG. 1 performs stability identification and stability recovery by a self-mutual-group multilevel stability identification and stability recovery method for a multi-port energy router disclosed by the invention. The multi-port energy router system comprises a voltage and current acquisition module, an impedance generation module, a communication module, an information processing module, a three-layer impedance reshaping module and the like, wherein the three-layer impedance reshaping module guarantees the whole stability of the system by adopting a three-layer impedance reshaping stability recovery control strategy.

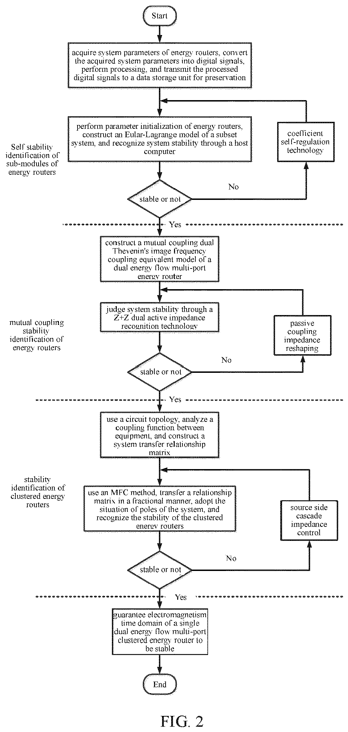

The self-mutual-group multilevel stability identification and stability recovery method for a multi-port energy router, as shown in FIG. 2, comprises the following steps:

step 1: performing system parameter initialization on a single dual energy flow multi-port energy router system to be detected, wherein system parameters comprise a resistance value, an inductance value, a capacitance value, a line impedance and a switching frequency of three sub-systems of a front-end DC converter, a dual active bridge bidirectional DC-DC converter(Dual Active Bridge, namely DAB) and a back-end AC/DC converter comprising a back-end AC converter and a back-end DC converter in the multi-port energy router of in the energy router system, and parameters of energy storage equipment and photovoltaic equipment at multiple interfaces;

step 2: constructing an Eular-Lagrange mathematical model according to a topology structure of the front-end DC converter, calculating a transfer function according to the mathematical model of the front-end DC converter, further judging the stability of a DC front end of the multi-port energy router system, if the judgment result shows instability, determining that the multi-port energy router system is in self-hierarchy instability, executing step 7, or else, executing step 3;

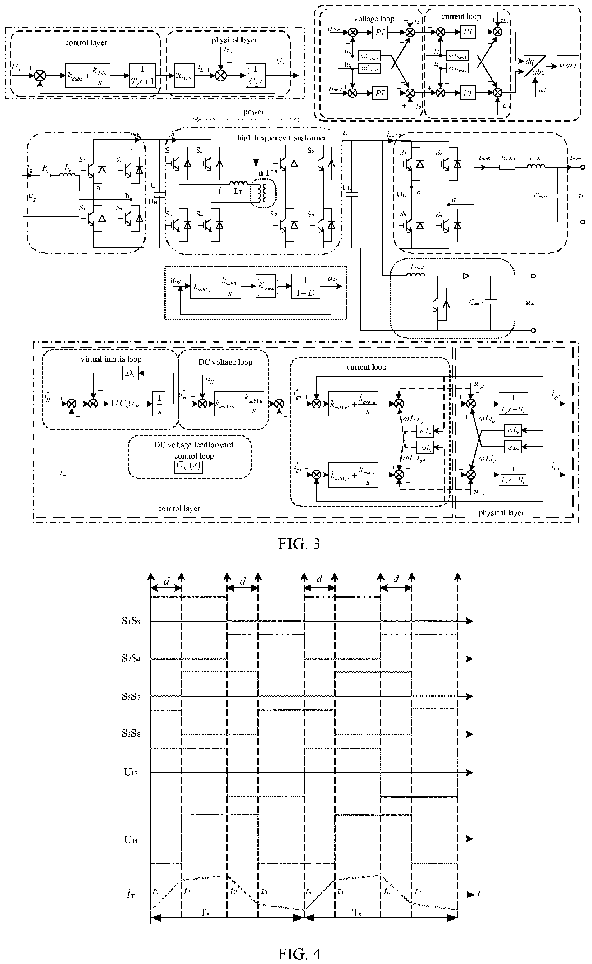

step 2.1: constructing a mathematical model according to a front-end DC circuit in the topology and control block diagram of a single dual energy flow multi-port energy router as shown in FIG.3, wherein $C_H$ is DC side output capacitance, $L_r$ is AC side input filter inductance, $R_r$ is AC side equivalent resistance, $u_g$ is grid voltage, $i_g$ is grid current, $U_H$ is DC side voltage, $D_b$ is a droop coefficient, $U_n$ is DC side rated voltage, $C_v$ is introduced virtual capacitance, $i_{REC}$ is DC side current, $i_H$ is DC side output current, and H is a current feedforward coefficient; the mathematical expression of the front-end DC circuit is as shown in:

$$
\begin{cases}
u_{gd} = u_{abd} + R_r i_{gd} + L_r \dfrac{di_{gd}}{dt} + \omega L_r i_{gq} \\[2mm]
u_{gq} = u_{abq} + R_r i_{gq} + L_r \dfrac{di_{gq}}{dt} - \omega L_r i_{gd}
\end{cases}
\tag{1}
$$

a PI controller is used as a current control inner loop which can be expressed as $G_i(s) = k_{recpi} + k_{recii}\,/\,s$; and therefore, an equation (1) can be expressed as follows:

$$
\begin{cases}
u_{gd} = -G_i(s)\left(i_{gd}^* - i_{gd}\right) + u_{abd} + \omega L_r i_{gq} + H i_{gd} \\[2mm]
u_{gq} = -G_i(s)\left(i_{gq}^* - i_{gq}\right) + u_{abq} - \omega L_r i_{gd} + H i_{gq}
\end{cases}
\tag{2}
$$

step 2.2: according to the front-end DC circuit control strategy in the topology and control diagram of the single dual energy flow multi-port energy router as shown in FIG. 3, expressing a transfer function of the current inner loop as follows:

$$\begin{cases} i_{gd}(s) = \left( i_{gd}^*(s) - i_{gd}(s) \right) G_i(s) / (R_r + L_r s) \\ i_{gq}(s) = \left( i_{gq}^*(s) - i_{gq}(s) \right) G_i(s) / (R_r + L_r s) \end{cases} \tag{3}$$

ignoring energy depletion, and simplifying the equation (3) as follows according to a principle of the same power on two sides of the front-end DC circuit:

$$\frac{1}{2}\left( u_{gd} i_{gd} + u_{gq} i_{gq} \right) = u_H i_{REC} = u_H \left( C \frac{du_H}{dt} + i_H \right) \tag{4}$$

further, expressing the transfer function of the equation (4) as follows:

$$\frac{1}{2}\left( U_{gd} i_{gd} + \Delta u_{gd} I_{gd} \right) = C U_H \frac{du_H}{dt} + U_H \Delta i_H + \Delta u_H I_H \tag{5}$$

according to a superposition principle, expressing the relationship of $u_H(s)$ and $i_{gd}(s)$, as well as $u_H(s)$ and $i_H(s)$ as follows:

$$\begin{cases} G_1(s) = u_H(s) / i_{gd}(s) = U_{gd} / 2\left( C U_H s + I_H \right) \\ G_2(s) = u_H(s) / i_H(s) = -U_H / \left( C U_H s + I_H \right) \end{cases} \tag{6}$$

and ignoring the influence of grid voltage, applying a virtual inertia controller, a DC output current feedback controller and a voltage loop PI controller to the energy routers, and expressing a small-signal model as follows:

$$TF(s) = \frac{\Delta u_H(s)}{\Delta i_H(s)} = \frac{G_{vir}(s) G_v(s) G_c(s) G_1(s) + G_2(s)}{1 + G_v(s) G_c(s) G_1(s)} \tag{7}$$

wherein,

$$G_v(s) = k_{recpu} + k_{reciu} / s \,,$$

$$G_c(s) = G_i(s) / \left( G_i(s) + (L_r s + R_r) + H \right) \,,$$

and

$$G_{vir}(s) = -1 / \left( D_b + G_v(s) U_n s + H \right)$$

step 2.3: performing processing through DSP according to the obtained transfer function of the front-end DC circuit to obtain data, transferring the data to a host computer through an SCI communication module, determining the number of right poles through calculating a Nyquist curve, if the number is zero, determining that the front-end DC circuit is stable, and executing step 3, if the number is not zero, determining that the front-end DC circuit is not stable, and performing step 7;

step 3: constructing an Eular-Lagrange mathematical model according to a topology structure of the dual active bridge bidirectional DC-DC converter, calculating a transfer function according to the mathematical model of the dual active bridge bidirectional DC-DC converter, further judging the stability, if the judgment result shows instability, determining that the multi-port energy router system is in self-hierarchy instability, executing the step 7, or else, executing step 4;

step 3.1: obtaining power conversion of a DAB structure through a power transmission control strategy of the dual active bridge bidirectional DC-DC converter, a DAB module and a power transmission control single phase shifting control strategy through FIG. 3, wherein a dual active bridge converter is used as a kernel module for voltage grade conversion and electrical isolation in the energy routers, the transformation ratio of a high-frequency transformer is n:1, $C_H$ ishigh-voltage side DC bus capacitance (the capacitance is the same as DC bus capacitance of the front-end DC circuit), $C_L$ is low-voltage side DC bus capacitance (the capacitance is the same as DC bus capacitance of a back-end AC-DC circuit), $L_T$ is the sum of leakage inductance and auxiliary induction of a high frequency transformer, $U_H$ is high-voltage side DC bus voltage, $U_L$ is low-voltage side DC bus voltage, $U_{12}$ and $U_{34}$ are high frequency chopping voltage output from an H bridge on two sides of the DAB, $i_T$ is original side current of the high frequency transformer, and $i_L$ is low-voltage DC side current of the DAB;

step 3.2: when the transformation ratio of the transformer is about 1, determining that a single phase shifting control strategy has smaller current stress compared with other phase shifting control strategies, wherein a control scheme is easier to realize, FIG. 4 shows the schematic diagram of a driving signal and voltage and current of each switching tube of the DAB in single phase shifting control; obtaining the power transmission characteristics of the DAB under single phase shifting control through analysis of leakage inductance current of the transformer and voltage at two ends of the transformer at each time; and

obtaining high-voltage side power relationship of the DAB for deduction of DAB-grade power transmission characteristics:

$$P_H = \frac{nU_H U_L}{4L_T} d\left(1-d\right)T_s = U_L I_{Lo} \tag{8}$$

step 3.3: calculating a transfer function of voltage and current according to the obtained DAB power transfer relationship, judging stability, ordering $D_s = d(1-d)$ in the above formula, and deducing output current of a DAB low-voltage side DC link as:

$$\frac{nU_H}{4L_T}T_s D_s = I_L \tag{9}$$

ordering $k_{DAB} = \frac{nU_H}{4L_T}T_s$, and expressing the above formula as:

$$I_L = k_{DAB} D_s \tag{10}$$

writing out a capacitance current equation in a DAB-grade low-voltage side DC link:

$$I_L - I_{Lo} = C_L \frac{dU_L}{dt} \tag{11}$$

according to deduction of a DAB model equation, in order to be better adapted to practice, and considering a delay link $G_d(s) = 1 / T_s s + 1$ in control, wherein a PI link is

$$G_{dabpi}\left(s\right) = k_{dabp} + k_{dabi} / s \; ;$$

when load current changes, the regulation characteristics of DAB-grade low-voltage side DC voltage can be influenced, in order to reduce or eliminate the influence, introducing a feedforward control link into the load current in a controller,

writing the transfer function of the feedforward link in the following form:

$$G_{DAB\_F}(s) = \frac{k_{DAB}G_d(s)}{k_{DAB}G_{dabpi}(s)G_d(s) + C_L s} F \quad (12)$$

wherein, F is a feedforward coefficient,
in order to eliminate the influence of the load current, obtaining:

$$\frac{1}{k_{DAB}G_{dabpi}(s)G_d(s) + C_L s} = \frac{k_{DAB}G_d(s)}{k_{DAB}G_{dabpi}(s)G_d(s) + C_L s} F \quad (13)$$

therefore, determining the transfer function F of the feedforward link of the load current as:

$$F = \frac{1}{k_{DAB}G_d(s)} \quad (14)$$

taking the feedforward coefficient as $F = 1 / k_{DAB}$, and deducing that a transfer function of DC bus voltage $U_L$ and a transfer function of disturbance quantity load current $i_{Lo}$ before and after introducing feedforward can be respectively:

$$\begin{cases} G_{DAB\_i}(s) = \dfrac{-1}{k_{DAB}G_{dabpi}(s)G_d(s) + C_L s} \\ G_{DAB\_i\_F}(s) = \dfrac{G_d(s) - 1}{k_{DAB}G_{dabpi}(s)G_d(s) + C_L s} \end{cases} \quad (15)$$

according to the obtained DAB transfer function, performing processing through the DSP to obtain data, transferring the data to the host computer through the SCI communication module, further determining the number of right poles through calculating the Nyquist curve, if the number is zero, determining that the DAB is stable, continuing to execute step 4, if the number is not zero, determining that the result is not stable, and performing the step 7;

step 4: constructing an Eular-Lagrange mathematical model according to a circuit topology structure of the back-end AC/DC converter, calculating a transfer function according to the mathematical model of the back-end AC/DC converter, judging the stability of the back-end AC/DC converter according to a Nyquist curve of the transfer function, if the judgment result shows instability, determining that the multi-port energy router system is in self-hierarchy instability, executing the step 7, or else, executing step 5;

step 4.1: constructing the mathematical model according to practical parameters of a back-end AC/DC circuit, wherein a part of topology structure of a back-end AC circuit is shown as FIG. 3, and a DC/AC conversion grade inductance current mathematical model under a rotating coordinate system can be expressed as:

$$\begin{cases} L_{inv} \dfrac{di_{invd}}{dt} + R_{inv}i_{invd} = u_{abd} - u_{invd} + \omega L_{inv}i_{invq} \\ L_{inv} \dfrac{di_{invq}}{dt} + R_{inv}i_{invq} = u_{abq} - u_{invq} - \omega L_{inv}i_{invd} \end{cases} \quad (16)$$

according to the mathematical model, the electric quantity of dq shafts has coupling relationship, and in order to eliminate mutual influence on control and guarantee independent control of the dq shafts, a coupling quantity feedback value needs to be introduced into the controller so that the coupling relationship between the dq shafts can be eliminated; a regulator in the current inner loop adopts PI control to guarantee effective tracing of DC/AC conversion grade current; as shown in a control block diagram in FIG. 3, the equation can be written as:

$$\begin{cases} u_{abd} = \left( k_{invpi} + \dfrac{k_{invii}}{s} \right) \left( i^{*}_{invd} - i_{invd} \right) + u_{invd} - \omega L_{inv} i_{invq} + H i_{ivnd} \\ \\ u_{abq} = \left( k_{invpi} + \dfrac{k_{invii}}{s} \right) \left( i^{*}_{invq} - i_{invq} \right) + u_{invq} + \omega L_{inv} i_{invd} + H i_{invq} \end{cases} \tag{17}$$

under a dq coordinate system, a system topology has inductance-current coupling relationship, so that a coupling quantity is introduced into a control layer to eliminate coupling variables; the model of a decoupled DC/AC conversion grade current inner loop controller can be expressed as:

$$\begin{cases} i_{invd}(s) = \left( i^{*}_{invd}(s) - i_{invd}(s) \right) \left( k_{invpi} + \dfrac{k_{invii}}{s} \right) / \left( R_{inv} + L_{inv}s + H \right) \\ \\ i_{invq}(s) = \left( i^{*}_{invq}(s) - i_{invq}(s) \right) \left( k_{invpi} + \dfrac{k_{invii}}{s} \right) / \left( R_{inv} + L_{inv}s + H \right) \end{cases} \tag{18}$$

considering the delay influence of a sampling link and a driving link on the controller, voltage loop decoupling control is further simplified as:

$$\begin{cases} i^{*}_{invd} = \left( u^{*}_{invd}(s) - u_{invd}(s) \right) \left( k_{invpu} + \dfrac{k_{inviu}}{s} \right) \left( \dfrac{1}{1+T_s s} \right) \dfrac{G_{invI}(s)}{C_{inv}s} \\ \\ i^{*}_{invq} = \left( u^{*}_{invq}(s) - u_{invq}(s) \right) \left( k_{invpu} + \dfrac{k_{inviu}}{s} \right) \left( \dfrac{1}{1+T_s s} \right) \dfrac{G_{invI}(s)}{C_{inv}s} \end{cases} \tag{19}$$

an open-loop transfer function of a dq shaft current inner loop is:

$$\begin{cases} G_{oid}(s) = \left( k_{invpi} + \dfrac{k_{invii}}{s} \right) \left( \dfrac{1}{1+T_s s} \right) \left( \dfrac{K_{pwm}}{1+0.5T_s s} \right) / \left( R_{inv} + L_{inv}s + H \right) \\ \\ G_{oiq}(s) = \left( k_{invpi} + \dfrac{k_{invii}}{s} \right) \left( \dfrac{1}{1+T_s s} \right) \left( \dfrac{K_{pwm}}{1+0.5T_s s} \right) / \left( R_{inv} + L_{inv}s + H \right) \end{cases} \tag{20}$$

besides, a small-signal conversion function can be expressed as follows:

$$G_{invI}(s) = \dfrac{G_{oi}(s)}{1+G_{oi}(s)} = \dfrac{1}{\dfrac{1.5 L_{inv} T_s}{k_{invpi} K_{pwm}} s^2 + \dfrac{L_{inv}s}{k_{invpi} K_{pwm}} s + 1} \tag{21}$$

for a voltage outer loop as shown in FIG. 3, according to similar analysis, the capacitance-voltage mathematical model of the DC/AC converter can be expressed as:

$$\begin{cases} i_{invd} = C \dfrac{du_{invd}}{dt} + i_{loadd} - \omega C u_{invq} + K u_{invd} \\ \\ i_{invq} = C \dfrac{du_{invq}}{dt} + i_{loadq} + \omega C u_{invd} + K u_{invq} \end{cases} \tag{22}$$

PI control is also applied to current control, and the formula is as follows:

$$\begin{cases} i_{invd}^* = \left(u_{invd}^*\left(s\right) - u_{invd}\left(s\right)\right)\left(k_{invpu} + \dfrac{k_{inviu}}{s}\right) + i_{loadd} - \omega C_{inv}u_{invq} + Ku_{invd} \\ i_{invq}^* = \left(u_{invq}^*\left(s\right) - u_{invq}\left(s\right)\right)\left(k_{invpu} + \dfrac{k_{inviu}}{s}\right) + i_{loadq} + \omega C_{inv}u_{invd} + Ku_{invq} \end{cases} \tag{23}$$

considering sampling delay and symmetry of an external controller, a transfer function of the voltage outer loop can be expressed as:

$$G_{oinvU}\left(s\right) = \left(k_{invpu} + \dfrac{k_{inviu}}{s}\right)\left(\dfrac{1}{1+T_s s}\right)\dfrac{G_{invI}\left(s\right)}{C_{inv}s} \tag{24}$$

step 4.2: according to the transfer function of the obtained back-end AC/DC circuit, performing processing through a main control unit to obtain data, transferring the data to the host computer through the SCI communication module, further determining the number of right poles through calculating the Nyquist curve, if the number is zero, determining that the back-end AC/DC circuit is stable, and continuing to execute step 5, if the number is not zero, determining that the result is not stable, and performing the step 7;

step 5: after determining that a basic three-level independent sub-system of the single dual energy flow multi-port energy router system is stable through steps 2-4, enabling new energy equipments including a multi-load equipment, an energy storage equipment, a photovoltaic equipment and a fan to be accessed to front and back buses of the dual active bridge bidirectional DC-DC converter, and further determining the single stability of a mutually-coupled single dual energy flow multi-port energy router system, wherein the front pole and the back pole of the dual active bridge bidirectional DC-DC converter are symmetrical, only the front-pole stability is explained in details as follows:

step 5.1: enabling n pieces of different equipments including the new energy equipments of the multi-load equipment, the energy storage equipment, the photovoltaic equipment and the fan to be in parallel connection to a front end of the dual active bridge bidirectional DC-DC converter, without considering the independent stability of the multi-load equipment and the photovoltaic equipment, independently taking each interface in the multi-port energy router system as a sub-module due to existence of the line impedance and mutual coupling influence of input/output impedance after parallel connection of equipments, wherein the line impedance exists between every two interfaces, enabling the structure of a multi-interface circuit to be equivalent to that of the Thevenin's circuit in image frequency coupling through a generalized bandwidth small-disturbance current injector, and judging system stability through constructing a system whole relationship function matrix extending to a periphery from interfaces, and closed-loop pole positions of the system;

step 5.1.1: enabling the n pieces of equipments to be in parallel connection to a bus at a front end of the front-end DC converter and correspond to n nodes, setting each node to have a power supply and load, and enabling the line impedance to exist between a connection line of any two pieces of equipment, wherein the equipment having output external characteristic of outputting energy outwards is called as a source equipment, and the equipment having the output external characteristic of consuming energy is called as a load equipment;

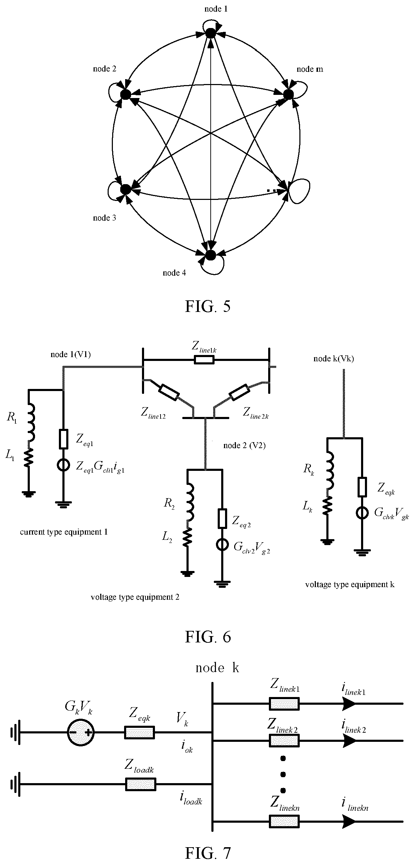

the embodiment is simplistically analyzed by using FIG. 5 as the structural diagram of a circuit of m interface equipment, FIG. 6 is the structure diagram of an interface of equipment k, the topology structure can be popularized to n equipment as shown in FIG. 7, each node is set to have a power supply and load at the same time, for pure load, energy provided by the power supply is zero, for a power supply system, the load is zero, thus, switching between the source equipment and the load equipment at any time in an energy interaction process can be met, and a connection line between any two pieces of equipment has line impedance;

step 5.1.2: for analysis of the whole stability of the single dual energy flow multi-port energy router, because the stability of DC equipments of external energy storage equipments, new energy equipments and the like can change along with changes of the number of interfaces, performing modeling on a multiple parallel connection system of the multi-port energy router by a matrix fractional criterion (MFC) method:

firstly, building a relationship function matrix of the whole multi-port energy router system, further obtaining the closed-loop pole positions of the system so as to judge the stability of the system, and building a relationship function matrix K(s) consisting of n*n relationship functions for the multi-port energy router system consisting of the n pieces of equipments, wherein an element in the $a^{th}$ row and the $b^{th}$ line in the matrix is a relationship function constructed between equipment a and equipment b;

step 5.1.3: judging a zero point and a pole corresponding to each node in the K(s) by the MFC method, expressing the relationship function matrix as a ratio of two polynomial matrices, setting $N(s)D^{-1}(s)$ and $A^{-1}(s)B(s)$ as respectively to be any right MFC and any left MFC which cannot be simplified in the given relationship function matrix K(s), wherein N(s) expresses an any right MFC numerator part which cannot be simplified of the given relationship function matrix K(s), D(s) expresses an any right denominator part which cannot be simplified of the given relationship function matrix K(s), A(s) expresses an any right MFC denominator part which cannot be simplified of the given relationship function matrix K(s), and B(s) expresses an any right MFC numerator part which cannot be simplified of the given relationship function matrix K(s), and

expressing the zero point and the pole of the K(s) as: the pole of the K(s) is the root of det D(s)=0 or the root of det A(s)=0, and the zero point of the K(s) is an s value enabling the N(s) or the B(s) to be subjected to ranking reduction; and

step 5.1. 4:analyzing the equipment at any node k, wherein,Vk is voltage at the node k, $i_{ok}$ is current output from a front-end DC circuit, $i_{linckj}$ is current between the node k and a node j, $Z_{loadk}$ is local load impedance, $i_{loadk}$ is local load current, $Z_{linekj}$ is line impedance between the node k and the node j, if the spacing between two nodes is small, the impedance can be ignored and is zero, then admittance is infinitely great,

then an equation describing the local load voltage and the local load current at the node k is:

$$V_k = Z_{loadk} i_{loadk}$$

an equation describing voltage and current between the node k and the node j is:

$$V_k - V_j = Z_{linckj} i_{linckj}$$

wherein $V_j$ is voltage at the node j;
current output from the front-end DC circuit at the node k is:

$$i_{ok} = Y_{eqk} (G_k V_k - V_k)$$

wherein, $Y_{eqk} = Z_{eqk}^{-1}$ is line admittance between the node k and the node j, $Z_{eqk}$ is line impedance between the node k and the node j, and $G_k$ is a proportional coefficient;
the expression of the local load current at the node k is:

$$i_{loadk} = Y_{loadk} V_k$$

wherein $Y_{loadk} = Z_{loadk}^{-1}$ is load admittance, and $Z_{loadk}$ is load impedance;
the expression of current flowing from the node k to the node j is:

$$i_{linekj} = Y_{linekj} (V_k - V_j)$$

wherein $Y_{linekj} = Z_{linekj}^{-1}$ is line admittance between the node k and the node j;
according to a kirchhoff's law, current flowing in the node k is equal to current flowing out of the node k, then

$$i_{ok} = \sum_{j=1, j \neq k}^{n} \left( i_{linekj} + i_{loadk} \right)$$

enabling the above-mentioned formula to be simultaneous, and obtaining equivalent impedance at the node k, as shown in the following formula:

$$Y_k V_k - \sum_{j=1, j \neq k}^{n} (Y_{linekj} V_j) = Y_{eqk} G_k V_k$$

$$Y_k = Y_{qek} + Y_{loadk} + \sum_{j=1, j\neq k}^{n} Y_{linekj}$$

wherein ;

extending the pole of the relationship function matrix K(s) to the whole energy routers and an external equipment system for analysis, and combining kirchhoff's formulas at all the nodes to form a matrix form:

$$\begin{bmatrix} i_{o1} \\ i_{o2} \\ \cdots \\ i_{on} \end{bmatrix} = \begin{bmatrix} Y_{eq1} & 0 & \cdots & 0 \\ 0 & Y_{eq2} & \cdots & 0 \\ \cdots & \cdots & \cdots & \cdots \\ 0 & 0 & \cdots & Y_{eqn} \end{bmatrix} \cdot \left( \begin{bmatrix} Z_{eq1}G_{cli1}i_{g1} \\ G_{clv2}V_2 \\ \cdots \\ G_{clvn}V_n \end{bmatrix} - \begin{bmatrix} V_1 \\ V_2 \\ \cdots \\ V_n \end{bmatrix} \right)$$

$$\begin{bmatrix} Y_1 & -Y_{line12} & \cdots & -Y_{line1n} \\ -Y_{line21} & Y_2 & \cdots & -Y_{line2n} \\ \cdots & \cdots & \cdots & \cdots \\ -Y_{linen1} & -Y_{linen2} & \cdots & Y_n \end{bmatrix} \cdot \begin{bmatrix} V_1 \\ V_2 \\ \cdots \\ V_n \end{bmatrix} = \begin{bmatrix} Y_{eq1} & 0 & \cdots & 0 \\ 0 & Y_{eq2} & \cdots & 0 \\ \cdots & \cdots & \cdots & \cdots \\ 0 & 0 & \cdots & Y_{eqn} \end{bmatrix} \cdot \begin{bmatrix} Z_{eq1}G_{cli1}i_{g1} \\ G_{clv2}V_2 \\ \cdots \\ G_{clvn}V_n \end{bmatrix}$$

enabling the two formulas to be simultaneous, and performing simplification:

$$\begin{bmatrix} i_{o1} \\ i_{o2} \\ \cdots \\ i_{on} \end{bmatrix} = (Y_{M2} - Y_{M2}Y_{M1}^{-1}Y_{M2}) \cdot \begin{bmatrix} Z_{eq1}G_{cli1}i_{g1} \\ G_{clv2}V_2 \\ \cdots \\ G_{clvn}V_n \end{bmatrix}$$

wherein

$$Y_{M1} = \begin{bmatrix} Y_1 & -Y_{line12} & \cdots & -Y_{line1n} \\ -Y_{line21} & Y_2 & \cdots & -Y_{line2n} \\ \cdots & \cdots & \cdots & \cdots \\ -Y_{linen1} & -Y_{linen2} & \cdots & Y_n \end{bmatrix}, \quad Y_{M2} = \begin{bmatrix} Y_{eq1} & 0 & \cdots & 0 \\ 0 & Y_{eq2} & \cdots & 0 \\ \cdots & \cdots & \cdots & \cdots \\ 0 & 0 & \cdots & Y_{eqn} \end{bmatrix},$$

$G_{cli}$ expresses a current proportional coefficient, and $G_{clv}$ expresses a voltage proportional coefficient;

with a matrix $Y_{M2} - Y_{M2}Y_{M1}^{-1}Y_{M2}$ as a closed-loop relationship function matrix K(s) of the energy router system, through judging the stability of the K(s) namely the stability of the system, converting the K(s) into a matrix multiplication form,

$$K(s) = Y_{M2} - Y_{M2}Y_{M1}^{-1}Y_{M2} = (Y_{M1}Y_{M2}^{-1})^{-1}(Y_{M1} - Y_{M2})$$

namely

$$A(s) = Y_{M1}Y_{M2}^{-1}, \quad B(s) = Y_{M1} - Y_{M2};$$

step 5.2: performing relative prime verification on the relationship matrix K(s) by a ranking criterion method, because p*p and p*q are n-order square matrices A(s) and B(s), the A(s) is a non-singular matrix namely a full rank matrix, and if rank[A(s)B(s)]=p, the A(s) and the B(s) are left relative primes; because $A(s) = Y_{M1}Y_{M2}^{-1}$ and B(s) = $Y_{M1}$ - $Y_{M2}$ are n-order square matrices, the A(s) is the non-singular matrix, a determinant is a polynomial of s, rank[A(s)B(s)] =n, and left MFC conditions which cannot be simplified are met, obtaining the closed-loop poles of the system through solving the root of $\det(Y_{M1}Y_{M2}^{-1}) = 0$; observing the number of the closed-loop poles on a right plane, when the number of the poles is zero, determining that the system is stable, and if the number of the poles is not zero, determining that the system cannot be stable; and besides, judging the position of unstable equipment according to analysis of the position where the pole is zero, if the judgment result shows instability, determining that the multi-port energy router system is in mutual-hierarchy instability, executing the step 7, or else, executing step 6;

step 6: after determining that the mutually-coupled single dual energy flow multi-port energy router system is in single stability through the step 5, judging the stability of a whole clustered dual energy flow multi-port energy router system;

step 6.1: when the system is obtained through mixed connection of m energy routers, obtaining an output impedance matrix of the clustered energy router system through a generalized bandwidth small-disturbance current injector, and performing denoising processing on the clustered energy router system through the following formula to obtain an admittance matrix flow diagram of the clustered energy router system,

$$Z_{i'j'}^* \begin{bmatrix} 1 & TR_{i'j'} \\ TG_{i'j'} & 1 \end{bmatrix} Z_{i'j'}$$

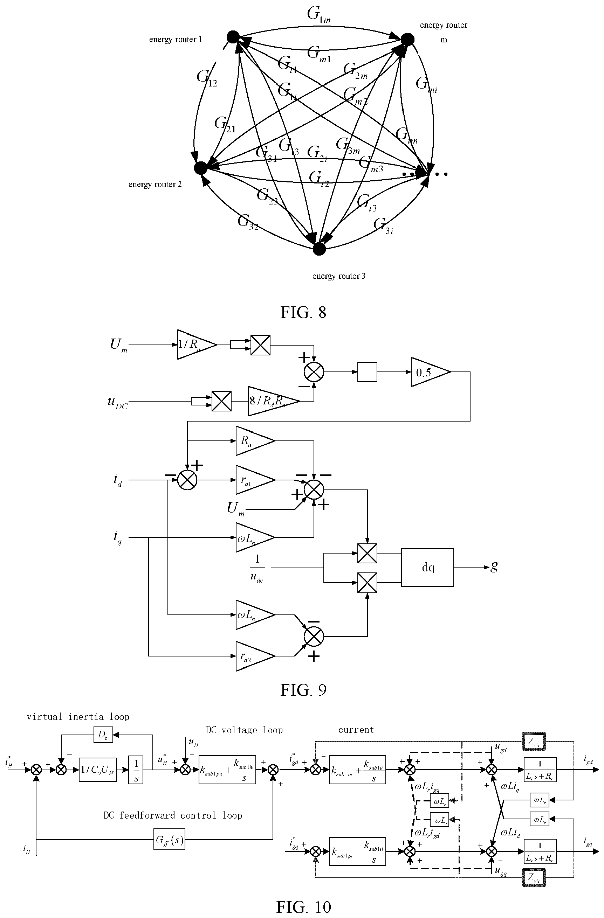

wherein, $TR_{i'j'}$ and $TG_{i'j'}$ are mutual resistance and mutual conductance between the two energy routers, $i' = 1,\cdots, m, j' = 1,\cdots, m, i' \neq j'$, $G_{i'j'}$ and $G_{j'i'}$ are two groups of Thevenin's equivalent output admittance matrices obtained through analysis of the two energy routers from different angles, $Z_{i'j'}$ is an equivalent output impedance matrix from the $i_{th}$ energy router to the $j_{th}$ energy router, and $Z_{i'j'}^*$ is a transposed matrix of $Z_{i'j'}$; and in the embodiment, an admittance matrix flow diagram as shown in FIG. 8 can be obtained through two groups of the Thevenin's equivalent output admittance matrices;

step 6.2: according to a relevance and system stability characteristic condition of an admittance matrix, when steps 1-5 determine that the system is in self-hierarchy stability and mutual-hierarchy stability and the following formula does not have right poles:

$$f(m) = \prod_{i',j'=1}^{m} \frac{G_{i'j'}G_{j'i'}}{G_{i'j'} + G_{j'i'}}$$

determining that the clustered dual energy flow multi-port energy router system is stable, else, determining that the clustered dual energy flow multi-port energy router system is in group hierarchy instability of the energy routers, executing the step 7, and performing three-layer impedance reshaping of the clustered energy router so that the system is stable; and

step 7: if the clustered single dual energy flow multi-port energy router system is identified in the steps 2-6 to have an instability result, respectively adopting a parameter self-regulation technology, a passive coupling impedance reshaping technology and a source side cascade impedance reshaping technology for instability links at different layers in the steps 2-6 so that the system is stable:

step 7.1: for a phenomenon of self-hierarchy instability of the energy router, according to a principle that the smaller a droop coefficient is, the higher the system stability is, regulating a droop control coefficient in the back-end DC converter of the single energy router through the arc tangent function, as shown in the following formula, and executing the step 1 again;

$$R = R_0 \left[ 1 - k_1 \arctan\left( \frac{R - R_0}{R_0} k_2 \pi + \Gamma + \frac{1}{2}\pi \right) \right]$$

wherein, R expresses the droop coefficient, $R_0$ expresses an initial droop coefficient, $k_1$ and $k_2$ are proportional coefficients, and $\Gamma$ is a shift coefficient; and the stability of the system can be improved through reducing the droop coefficient of a system sub-module, but along with reduction of the droop coefficient, the dynamic properties of the system can be partially lost, the coefficient can be slowly regulated through the characteristics of the arc tangent function, and after the parameter self-regulation technology is adopted, the system performs the step 1;

step 7.2: for the phenomenon of mutual-hierarchy instability of the energy router, controlling power supply side cascade impedance to reduce impedance of the power supply side sub-system to meet stability of the system, enabling the front-end DC converter or the dual active bridge bidirectional DC-DC converter to be equivalent to be a generalized rectifier, wherein an Eular-Largrange model is expressed as:

$$\begin{bmatrix} L_n & 0 & 0 \\ 0 & L_n & 0 \\ 0 & 0 & 2C_d \end{bmatrix} \begin{bmatrix} \dot{i}_d \\ \dot{i}_q \\ \dot{u}_{dc} \end{bmatrix} + \begin{bmatrix} 0 & -\omega L_n & S_d \\ \omega L_n & 0 & S_q \\ -S_d & -S_q & 0 \end{bmatrix} \begin{bmatrix} i_d \\ i_q \\ u_{dc} \end{bmatrix} + \begin{bmatrix} R_n & 0 & 0 \\ 0 & R_n & 0 \\ 0 & 0 & \dfrac{2}{R_d} \end{bmatrix} \begin{bmatrix} i_d \\ i_q \\ u_{dc} \end{bmatrix} = \begin{bmatrix} u_d \\ u_q \\ 0 \end{bmatrix}$$

wherein $L_n, R_n, C_d, R_d$ are respectively equivalent inductance and resistance of the front end of the generalized rectifier, and equivalent inductance and resistance of the back end of the generalized rectifier, $u_{dc}, i_d, i_q$ are respectively DC front-end voltage and dq axial current of the generalized rectifier, $u_d, u_q$ are respectively dq axial voltage of an output side of the rectifier, $S_d$ and $S_q$ respectively express switching duty cycles under a d-q coordinate system, and $\omega$ expresses an angular velocity of the multi-port energy router system;
simplifying the above formula as:

$$M\dot{x} + Jx + Rx = u$$

wherein,

$$M = \begin{bmatrix} L_n & 0 & 0 \\ 0 & L_n & 0 \\ 0 & 0 & 2C_d \end{bmatrix}, \quad J = \begin{bmatrix} 0 & -\omega L_n & S_d \\ \omega L_n & 0 & S_q \\ -S_d & -S_q & 0 \end{bmatrix}, \quad R = \begin{bmatrix} R_n & 0 & 0 \\ 0 & R_n & 0 \\ 0 & 0 & \dfrac{2}{R_d} \end{bmatrix} \quad \text{and}$$

$$x = \begin{bmatrix} i_d \\ i_q \\ u_{dc} \end{bmatrix}, u = \begin{bmatrix} u_d \\ u_q \\ 0 \end{bmatrix}$$

respectively express state variable and terminal control of the multi-port energy router system;
expressing the ideal state variable of the multi-port energy router system as:

$$x_{ref} = \left[ x_{ref1}, x_{ref2}, x_{ref3} \right] = \left[ \frac{1}{2}\left[ \frac{U_m}{R_n} - \sqrt{\left(\frac{U_m}{R_n}\right)^2 - \frac{8u_{dc}^2}{R_d R_n}} \right], 0, u_{dc} \right]$$

wherein, $u_{dc}$ expresses a DC side voltage of the multi-port energy router system, $x_{ref}$ is an ideal state variable, and $U_m$ is a largest output voltage of the generalized rectifier;
constructing an energy function of a state variable error $x_e = x_{ref} - x$ as:

$$H_e = \frac{1}{2} x_e^T M x_e$$

therefore, rewriting the Eular-Largrange model of the generalized rectifier as:

$$M\dot{x}_e + Rx_e = -u + Jx + M\dot{x}_e + Rx_{ref} + M\dot{x}_{ref}$$

to guarantee that errors of the multi-port energy router system consistently converge to 0 finally, introducing a damping injection factor as shown in the following formula:

$$R_d x_e = \left( R + R_p \right) x_e$$

wherein, $R_p$ expresses a damping injection factor which is a symmetric positive definite damping matrix, namely

$$R_p = \begin{bmatrix} r_{p1} & & \\ & r_{p1} & \\ & & \dfrac{2}{r_{p3}} \end{bmatrix}$$

wherein, $r_{p1}$-$r_{p3}$ all express a virtual injection resistance;

through regulating $R_p$, guaranteeing the Lyapunov direct stability criterion, obtaining a mutual-hierarchy stability recovery control strategy of an energy router, as shown in FIG. 9; and after the passive coupling impedance reshaping technology is adopted, executing step 5 again; and

step 7.3: for a phenomenon of group-hierarchy instability of the energy routers, realizing system stability through enlarging a power supply side output admittance matrix namely reducing an output impedance value in a Thevenin's equivalent circuit, and under the circumstance that the single energy router is stable, enabling the clustered energy router to only induce a low frequency oscillation and a synchronous instability but not a whole frequency domain instability due to mutual coupling, so that designed virtual impedance adopts an impedance reshaping technology in a specific frequency domain, and the specific expression is shown as the following formula: as the energy router has a topology symmetric structure, an interconnection output source module can be compared with a generalized inverter, the control block diagram is shown as FIG. 10,

$$Z_{vir} = \frac{-2K \left( 2\pi f_{lo} \right) s}{s^2 + 2 \left( 2\pi f_{lo} \right) s + \left( 2\pi f_{on} \right)^2}$$

($f_{on}$ - $f_{lo}$, $f_{on}$ + $f_{lo}$) expresses an instability frequency range, $K$ expresses an attenuation coefficient, $Z_{vir}$ expresses a virtual impedance, $f_{lo}$ expresses a lower frequency limit, $f_{on}$ expresses an upper frequency limit, and s expresses a Laplace multiplier; and

after the source side cascade impedance reshaping technology is adopted, executing the step 6 again.

## Claims

1. A self-mutual-group multilevel stability identification and stability recovery method for a multi-port energy router, **characterized by** comprising the following steps:

   step 1: performing system parameter initialization on a single dual energy flow multi-port energy router system to be detected, wherein system parameters comprise a resistance value, an inductance value, a capacitance value, a line impedance and a switching frequency of three sub-systems of a front-end DC converter, a dual active bridge bidirectional DC-DC converter and a back-end AC/DC converter comprising a back-end AC converter and a back-end DC converter in the multi-port energy router of the energy router system, and parameters of energy storage equipment and photovoltaic equipment at multiple interfaces;

   step 2: constructing an Eular-Lagrange mathematical model according to a topology structure of the front-end DC converter, calculating a transfer function according to the mathematical model of the front-end DC converter, further judging the stability of a DC front end of the multi-port energy router system, if the judgment result shows instability, determining that the multi-port energy router system is in self-hierarchy instability, executing step 7, or else, executing step 3;

   step 3: constructing an Eular-Lagrange mathematical model according to a topology structure of the dual active bridge bidirectional DC-DC converter, calculating a transfer function according to the mathematical model of the dual active bridge bidirectional DC-DC converter, further judging the stability, if the judgment result shows instability, determining that the multi-port energy router system is in self-hierarchy instability, executing the step 7, or else, executing step 4;

step 4: constructing an Eular-Lagrange mathematical model according to a circuit topology structure of the back-end AC/DC converter, calculating a transfer function according to the mathematical model of the back-end AC/DC converter, judging the stability of the back-end AC/DC converter according to a Nyquist curve of the transfer function, if the judgment result shows instability, determining that the multi-port energy router system is in self-hierarchy instability, executing the step 7, or else, executing step 5;

step 5: after determining that a basic three-level independent sub-system of the single dual energy flow multi-port energy router system is stable through steps 2-4, enabling new energy equipments including a multi-load equipment, an energy storage equipment, a photovoltaic equipment and a fan to be accessed to front and back buses of the dual active bridge bidirectional DC-DC converter, and further determining the single stability of a mutually-coupled single dual energy flow multi-port energy router system; and if the judgment result shows instability, determining that the mutually-coupled single dual energy flow multi-port energy router system is in mutual-hierarchy instability, executing the step 7, or else, executing step 6;

step 6: after determining that the mutually-coupled single dual energy flow multi-port energy router system is in single stability through the step 5, judging the stability of a whole clustered dual energy flow multi-port energy router system, if the judgment result shows instability, determining that the clustered dual energy flow multi-port energy router system is in group hierarchy instability of the energy routers, executing the step 7, and performing three-layer impedance reshaping of a clustered energy router so that the system is stable; and

step 7: if the clustered single dual energy flow multi-port energy router system is identified in the steps 2-6 to have an instability result, respectively adopting a parameter self-regulation technology, a passive coupling impedance reshaping technology and a source side cascade impedance reshaping technology for instability links at different layers in the steps 2-6 so that the system is stable:

> step 7.1: for a phenomenon of self-hierarchy instability of the energy router, according to a principle that the smaller a droop coefficient is, the higher the system stability is, regulating a droop control coefficient in the back-end DC converter of the single energy router through an arc tangent function, and executing the step 1 again;

> step 7.2: for a phenomenon of mutual-hierarchy instability of the energy router, controlling power supply side cascade impedance to reduce impedance of a power supply side sub-system to meet stability of the system, and after the passive coupling impedance reshaping technology is adopted, executing the step 5 again; and

> step 7.3: for a phenomenon of group-hierarchy instability of the energy router, realizing system stability through enlarging a power supply side output admittance matrix namely reducing an output impedance value in a Thevenin's equivalent circuit, and under the circumstance that the single energy router is stable, enabling the clustered energy router to only induce a low frequency oscillation and a synchronous instability but not a whole frequency domain instability due to mutual coupling, so that designed virtual impedance adopts an impedance reshaping technology in a specific frequency domain, and after the source side cascade impedance reshaping technology is adopted, executing the step 6 again.

2. The self-mutual-group multilevel stability identification and stability recovery method for a multi-port energy router according to claim 1, **characterized in that** the step 5 comprises specific steps:

> step 5.1: enabling n pieces of different equipments including the new energy equipments of the multi-load equipment, the energy storage equipment, the photovoltaic equipment and the fan to be in parallel connection to a front end of the dual active bridge bidirectional DC-DC converter, without considering the independent stability of the multi-load equipment and the photovoltaic equipment, independently taking each interface in the multi-port energy router system as a sub-module due to existence of the line impedance and mutual coupling influence of input/output impedance after parallel connection of equipments, wherein the line impedance exists between every two interfaces, enabling the structure of a multi-interface circuit to be equivalent to that of the Thevenin's circuit in image frequency coupling through a generalized bandwidth small-disturbance current injector, and judging system stability through constructing a system whole relationship function matrix extending to a periphery from interfaces, and closed-loop pole positions of the system;

> step 5.1.1: enabling the n pieces of equipments to be in parallel connection to a bus at a front end of the front-end DC converter and correspond to n nodes, setting each node to have a power supply and load, and enabling the line impedance to exist between a connection line of any two pieces of equipment, wherein the equipment having output external characteristic of outputting energy outwards is called a source equipment, and the equipment having the output external characteristic of consuming energy is called a load equipment;

> step 5.1.2: performing modeling on a multiple parallel connection system of the multi-port energy router by a matrix fractional criterion (MFC) method:

firstly, building a relationship function matrix of the whole multi-port energy router system, further obtaining the closed-loop pole positions of the system so as to judge the stability of the system, and building a relationship function matrix K(s) consisting of n*n relationship functions for the multi-port energy router system consisting of the n pieces of equipments, wherein an element in the $a^{th}$ row and the $b^{th}$ line in the matrix is a relationship function constructed between equipment a and equipment b;

step 5.1.3: judging a zero point and a pole corresponding to each node in the K(s) by the MFC method, expressing the relationship function matrix as a ratio of two polynomial matrices, setting $N(s)D^{-1}(s)$ and $A^{-1}(s)B(s)$ as respectively to be any right MFC and any left MFC which cannot be simplified in the given relationship function matrix K(s), wherein N(s) expresses an any right MFC numerator part which cannot be simplified of the given relationship function matrix K(s), D(s) expresses an any right denominator part which cannot be simplified of the given relationship function matrix K(s), A(s) expresses an any right MFC denominator part which cannot be simplified of the given relationship function matrix K(s), and B(s) expresses an any right MFC numerator part which cannot be simplified of the given relationship function matrix K(s),and

expressing the zero point and the pole of the K(s) as: the pole of the K(s) is the root of det D(s)=0 or the root of det A(s)=0, and the zero point of the K(s) is an s value enabling the N(s) or the B(s) to be subjected to ranking reduction; and

step 5.1.4: analyzing the equipment at any node k, wherein k = $1,\cdots,n$, $V_k$ is a voltage at the node k, $i_{ok}$ is a current output from a front-end DC circuit, $i_{linckj}$ is a current between the node k and a node j, $j$ = 1, ... , n and $j \neq n$, $Z_{loadk}$ is a local load impedance, $i_{loadk}$ is a local load current, $Z_{linekj}$ is a line impedance between the node k and the node j,

then an equation describing a local load voltage and the local load current at the node k is:

$$V_k = Z_{loadk} i_{loadk}$$

an equation describing voltage and current between the node k and the node j is:

$$V_k - V_j = Z_{linckj} i_{linckj}$$

wherein, $V_j$ is a voltage at the node $j$;

the current output from the front-end DC circuit at the node k is:

$$i_{ok} = Y_{eqk} \left( G_k V_k - V_k \right)$$

wherein $Y_{eqk} = Z_{eqk}^{-1}$ is a line admittance between the node k and the node j, $Z_{eqk}$ is a line impedance between the node k and the node j, and $G_k$ is a proportional coefficient;

the expression of the local load current at the node k is:

$$i_{loadk} = Y_{loadk} V_k$$

wherein $Y_{loadk} = Z_{loadk}^{-1}$ is a load admittance, and $Z_{loadk}$ is a load impedance;

the expression of current flowing from the node k to the node j is:

$$i_{linekj} = Y_{linekj} \left( V_k - V_j \right)$$

wherein $Y_{linekj} = Z_{linekj}^{-1}$ is a line admittance between the node k and the node j;

according to a kirchhoff's law, current flowing in the node k is equal to current flowing out of the node k, then

$$i_{ok} = \sum_{j=1, j \neq k}^{n} \left( i_{linekj} + i_{loadk} \right)$$

enabling the above-mentioned formula to be simultaneous, and obtaining equivalent impedance at the node k, as shown in the following formula:

$$Y_k V_k - \sum_{j=1, j\neq k}^{n} (Y_{linekj} V_j) = Y_{eqk} G_k V_k$$

wherein

$$Y_k = Y_{qek} + Y_{loadk} + \sum_{j=1, j\neq k}^{n} Y_{linekj} \; ;$$

extending the pole of the relationship function matrix K(s) to the whole energy routers and an external equipment system for analysis, and combining kirchhoff's formulas at all the nodes to form a matrix form:

$$\begin{bmatrix} i_{o1} \\ i_{o2} \\ \cdots \\ i_{on} \end{bmatrix} = \begin{bmatrix} Y_{eq1} & 0 & \cdots & 0 \\ 0 & Y_{eq2} & \cdots & 0 \\ \cdots & \cdots & \cdots & \cdots \\ 0 & 0 & \cdots & Y_{eqn} \end{bmatrix} \cdot \left( \begin{bmatrix} Z_{eq1} G_{cli1} i_{g1} \\ G_{clv2} V_2 \\ \cdots \\ G_{clvn} V_n \end{bmatrix} - \begin{bmatrix} V_1 \\ V_2 \\ \cdots \\ V_n \end{bmatrix} \right)$$

$$\begin{bmatrix} Y_1 & -Y_{line12} & \cdots & -Y_{line1n} \\ -Y_{line21} & Y_2 & \cdots & -Y_{line2n} \\ \cdots & \cdots & \cdots & \cdots \\ -Y_{linen1} & -Y_{linen2} & \cdots & Y_n \end{bmatrix} \cdot \begin{bmatrix} V_1 \\ V_2 \\ \cdots \\ V_n \end{bmatrix} = \begin{bmatrix} Y_{eq1} & 0 & \cdots & 0 \\ 0 & Y_{eq2} & \cdots & 0 \\ \cdots & \cdots & \cdots & \cdots \\ 0 & 0 & \cdots & Y_{eqn} \end{bmatrix} \cdot \begin{bmatrix} Z_{eq1} G_{cli1} i_{g1} \\ G_{clv2} V_2 \\ \cdots \\ G_{clvn} V_n \end{bmatrix}$$

enabling the two formulas to be simultaneous, and performing simplification:

$$\begin{bmatrix} i_{o1} \\ i_{o2} \\ \cdots \\ i_{on} \end{bmatrix} = (Y_{M2} - Y_{M2} Y_{M1}^{-1} Y_{M2}) \cdot \begin{bmatrix} Z_{eq1} G_{cli1} i_{g1} \\ G_{clv2} V_2 \\ \cdots \\ G_{clvn} V_n \end{bmatrix}$$

wherein

$$Y_{M1} = \begin{bmatrix} Y_1 & -Y_{line12} & \cdots & -Y_{line1n} \\ -Y_{line21} & Y_2 & \cdots & -Y_{line2n} \\ \cdots & \cdots & \cdots & \cdots \\ -Y_{linen1} & -Y_{linen2} & \cdots & Y_n \end{bmatrix}, \quad Y_{M2} = \begin{bmatrix} Y_{eq1} & 0 & \cdots & 0 \\ 0 & Y_{eq2} & \cdots & 0 \\ \cdots & \cdots & \cdots & \cdots \\ 0 & 0 & \cdots & Y_{eqn} \end{bmatrix}, \quad G_{cli}$$

expresses a current proportional coefficient, and $G_{clv}$ expresses a voltage proportional coefficient;

with a matrix $Y_{M2} - Y_{M2} Y_{M1}^{-1} Y_{M2}$ as a closed-loop relationship function matrix K(s) of the energy router system, through judging the stability of the K(s) namely the stability of the system, converting the K(s) into a matrix multiplication form,

$$K(s) = Y_{M2} - Y_{M2} Y_{M1}^{-1} Y_{M2} = (Y_{M1} Y_{M2}^{-1})^{-1} (Y_{M1} - Y_{M2})$$

namely $A(s) = Y_{M1} Y_{M2}^{-1}$ , B(s) = $Y_{M1}$ -$Y_{M2}$ ; and

step 5.2: performing relative prime verification on the relationship matrix K(s) by a ranking criterion method, because $A(s) = Y_{M1} Y_{M2}^{-1}$ and B(s) = $Y_{M1}$ - $Y_{M2}$ are n-order square matrices, the A(s) is a non-singular matrix, a determinant is a polynomial of s, rank[A(s)B(s)]=n, and the left MFC conditions which cannot be simplified are met, obtaining the closed-loop poles of the system through solving a root of $\det(Y_{M1} Y_{M2}^{-1}) = 0$; observing the number of the closed-loop poles on a right plane, when the number of the poles is zero, determining that the system is stable, and if the number of the poles is not zero, determining that the system cannot be stable; and besides, judging the position of unstable equipment according to analysis of the position where the pole is zero, if the judgment result shows instability, determining that the multi-port energy router system is in mutual-hierarchy instability, executing the step 7, or else, executing step 6.

3. The self-mutual-group multilevel stability identification and stability recovery method for a multi-port energy router according to claim 2, **characterized in that** the step 6 comprises specific steps:

step 6.1: when the system is obtained through a mixed connection of m energy routers, obtaining an output impedance matrix of the clustered energy router system through a generalized bandwidth small-disturbance current injector, and performing denoising processing on the clustered energy router system through the following formula to obtain an admittance matrix flow diagram of the clustered energy router system,

$$Z_{ij'}^* \begin{bmatrix} 1 & TR_{ij'} \\ TG_{ij'} & 1 \end{bmatrix} Z_{ij'}$$

wherein $TR_{ij'}$ and $TG_{ij'}$ are mutual resistance and mutual conductance between the two energy routers, $i' = 1, \cdots, m, j' = 1, \cdots, m, i' \neq j'$, through analysis of the two energy routers from different angles, $G_{ij'}$ and $G_{ji'}$, which are obtained, are two groups of Thevenin's equivalent output admittance matrices obtained through analysis of the two energy routers from different angles, $Z_{ij'}$ is an equivalent output impedance matrix from the $i_{th}$ energy router to the $j_{th}$ energy router, and $Z_{ij'}^*$ is a transposed matrix of $Z_{ij'}$; and

step 6.2: according to a relevance and system stability characteristic condition of an admittance matrix, when steps 1-5 determine that the system is in self-hierarchy stability and mutual-hierarchy stability and the following formula does not have right poles:

$$f(m) = \prod_{i',j'=1}^{m} \frac{G_{ij'} G_{ji'}}{G_{ij'} + G_{ji'}}$$

determining that the clustered dual energy flow multi-port energy router system is stable, else, determining that the clustered dual energy flow multi-port energy router system is in group hierarchy instability of the energy routers, executing the step 7, and performing three-layer impedance reshaping of the clustered energy router so that the system is stable.

4. The self-mutual-group multilevel stability identification and stability recovery method for a multi-port energy router according to claim 3, **characterized in that** in step 7.1, the droop control coefficient in the back-end DC converter of the single energy router is regulated through the arc tangent function, as shown in the following formula:

$$R = R_0 \left[ 1 - k_1 \arctan\left( \frac{R - R_0}{R_0} k_2 \pi + \Gamma + \frac{1}{2} \pi \right) \right]$$

wherein, $R$ expresses the droop coefficient, $R_0$ expresses an initial droop coefficient, $k_1$ and $k_2$ are proportional coefficients, and $\Gamma$ is a shift coefficient.

5. The self-mutual-group multilevel stability identification and stability recovery method for a multi-port energy router according to claim 4, **characterized in that** step 7.2 of controlling power supply side cascade impedance to reduce impedance of the power supply side sub-system to meet stability of the system comprises specific substeps:

enabling the front-end DC converter or the dual active bridge bidirectional DC-DC converter to be equivalent to be a generalized rectifier, wherein an Eular-Largrange model is expressed as:

$$\begin{bmatrix} L_n & 0 & 0 \\ 0 & L_n & 0 \\ 0 & 0 & 2C_d \end{bmatrix} \begin{bmatrix} \dot{i}_d \\ \dot{i}_q \\ \dot{u}_{dc} \end{bmatrix} + \begin{bmatrix} 0 & -\omega L_n & S_d \\ \omega L_n & 0 & S_q \\ -S_d & -S_q & 0 \end{bmatrix} \begin{bmatrix} i_d \\ i_q \\ u_{dc} \end{bmatrix} + \begin{bmatrix} R_n & 0 & 0 \\ 0 & R_n & 0 \\ 0 & 0 & \dfrac{2}{R_d} \end{bmatrix} \begin{bmatrix} i_d \\ i_q \\ u_{dc} \end{bmatrix} = \begin{bmatrix} u_d \\ u_q \\ 0 \end{bmatrix}$$

wherein $L_n, R_n, C_d, R_d$ are respectively equivalent inductance and resistance of the front end of the generalized rectifier, and equivalent inductance and resistance of the back end of the generalized rectifier, $u_{dc}, i_d, i_q$ are respectively DC front-end voltage and dq axial current of the generalized rectifier, $u_d, u_q$ are respectively dq axial voltage of an output side of the rectifier, $S_d$ and $S_q$ respectively express switching duty cycles under a d-q coordinate system, and $\omega$ expresses an angular velocity of the multi-port energy router system;
simplifying the above formula as:

$$M\dot{x} + Jx + Rx = u$$

$$M = \begin{bmatrix} L_n & 0 & 0 \\ 0 & L_n & 0 \\ 0 & 0 & 2C_d \end{bmatrix}, \quad J = \begin{bmatrix} 0 & -\omega L_n & S_d \\ \omega L_n & 0 & S_q \\ -S_d & -S_q & 0 \end{bmatrix}, \quad R = \begin{bmatrix} R_n & 0 & 0 \\ 0 & R_n & 0 \\ 0 & 0 & \dfrac{2}{R_d} \end{bmatrix} \text{ and}$$

wherein,

$$x = \begin{bmatrix} i_d \\ i_q \\ u_{dc} \end{bmatrix}, u = \begin{bmatrix} u_d \\ u_q \\ 0 \end{bmatrix}$$ respectively express state variable and terminal control of the multi-port energy router system;

expressing the ideal state variable of the multi-port energy router system as:

$$x_{ref} = \left[ x_{ref1}, x_{ref2}, x_{ref3} \right] = \left[ \frac{1}{2} \left[ \frac{U_m}{R_n} - \sqrt{\left( \frac{U_m}{R_n} \right)^2 - \frac{8u_{dc}^2}{R_d R_n}} \right], 0, u_{dc} \right]$$

wherein, $u_{dc}$ expresses a DC side voltage of the multi-port energy router system, $x_{ref}$ is an ideal state variable, and $U_m$ is a largest output voltage of the generalized rectifier;
constructing an energy function of a state variable error $x_e = x_{ref} - x$ as:

$$H_e = \frac{1}{2} x_e^T M x_e$$

therefore, rewriting the Eular-Largrange model of the generalized rectifier as:

$$M\dot{x}_e + Rx_e = -u + Jx + M\dot{x}_e + Rx_{ref} + M\dot{x}_{ref}$$

to guarantee that errors of the multi-port energy router system consistently converge to 0 finally, introducing a damping injection factor as shown in the following formula:

$$R_d x_e = \left( R + R_p \right) x_e$$

wherein, $R_p$ expresses a damping injection factor which is a symmetric positive definite damping matrix, namely

$$R_p = \begin{bmatrix} r_{p1} & & \\ & r_{p1} & \\ & & \dfrac{2}{r_{p3}} \end{bmatrix}$$

wherein, $r_{p1}$ -$r_{p3}$ all express a virtual injection resistance;
through regulating $Rp$, guaranteeing a Lyapunov direct stability criterion, and obtaining a mutual-hierarchy stability recovery control strategy of the energy routers.

6. The self-mutual-group multilevel stability identification and stability recovery method for a multi-port energy router according to claim 5, **characterized in that** in step 7.3, the specific expression of the impedance reshaping technology in the specific frequency domain is shown as the following formula:

$$Z_{vir} = \frac{-2K \left( 2\pi f_{lo} \right) s}{s^2 + 2 \left( 2\pi f_{lo} \right) s + \left( 2\pi f_{on} \right)^2}$$

wherein, ($f_{on}$ - $f_{lo}$ ,$f_{on}$ + $f_{lo}$) expresses an instability frequency range, $K$ expresses an attenuation coefficient, $Z_{vir}$ expresses a virtual impedance, $f_{lo}$ expresses a lower frequency limit, $f_{on}$ expresses an upper frequency limit, and s expresses a Laplace multiplier.

**Patentansprüche**

1. Verfahren zur Identifizierung und Wiederherstellung der Stabilität einer selbständigen Gruppe mit mehreren Niveaus für einen Energierouter mit mehreren Anschlüssen, **dadurch gekennzeichnet, dass** es die folgenden Schritte umfasst:

Schritt 1: Durchführen einer Systemparameterinitialisierung auf einem einzelnen zu erfassenden Dual-Energiefluss-Multiport-Energierouter-System, wobei die Systemparameter einen Widerstands-wert, einen Induktivitätswert, einen Kapazitätswert, eine Leitungsimpedanz und eine Schaltfrequenz von drei Untersystemen eines Front-End-Gleichstromwandlers, eines bidirektionalen Dual-Aktiv-brücken-Gleichstromwandlers und eines Back-End-AC/DC-Wandlers, der einen Back-End-Wechsel-stromwandler und einen Back-End-Gleichstromwandler in dem Multi-Port-Energierouter des Energierouter-Systems umfasst, sowie Parameter von Energiespeichergeräten und Photovoltaik-geräten an mehreren Schnittstellen umfassen;
Schritt 2: Konstruieren eines mathematischen Eular-Lagrange-Modells gemäß einer Topologie-struktur des Front-End-Gleichstromwandlers, Berechnen einer Übertragungsfunktion gemäß dem mathematischen Modell des Front-End-Gleichstromwandlers, ferner Beurteilen der Stabilität eines DC-Front-Ends des Mehrport-Energieroutersystems, wenn das Beurteilungsergebnis Instabilität zeigt, Bestimmen, dass sich das Mehrport-Energieroutersystem in einer Selbsthierarchie-Instabilität befindet, Ausführen von Schritt 7, oder andernfalls Ausführen von Schritt 3;
Schritt 3: Konstruieren eines mathematischen Eular-Lagrange-Modells entsprechend einer Topologiestruktur des bidirektionalen Doppel-Aktivbrücken-Gleichstromwandlers, Berechnen einer Übertragungsfunktion entsprechend dem mathematischen Modell des bidirektionalen Doppel-Aktiv-brücken-Gleichstromwandlers, weiteres Beurteilen der Stabilität, wenn das Beurteilungsergebnis Instabilität zeigt, Bestimmen, dass das Mehrport-Energieroutersystem in einer Selbsthierarchie-Instabilität ist, Ausführen des Schritts 7 oder andernfalls Ausführen von Schritt 4;
Schritt 4: Konstruieren eines mathematischen Eular-Lagrange-Modells gemäß einer Schaltungs-topologiestruktur des Back-End-AC/DC-Wandlers, Berechnen einer Übertragungsfunktion gemäß dem mathematischen Modell des Back-End-AC/DC-Wandlers, Beurteilen der Stabilität des Back-End-AC/DC-Wandlers gemäß einer Nyquist-Kurve der Übertragungsfunktion, wenn das Beurtei-lungsergebnis Instabilität zeigt, Bestimmen, dass sich das Multi-Port-Energierouter-System in einer Selbsthierarchie-Instabilität befindet, Ausführen des Schritts 7 oder andernfalls Ausführen von Schritt 5;

Schritt 5: nachdem festgestellt wurde, dass ein grundlegendes dreistufiges unabhängiges Untersystem des einzelnen Dual-Energiefluss-Multiport-Energieroutersystems durch die Schritte 2 bis 4 stabil ist, Ermöglichen des Zugriffs auf neue Energieausrüstungen, einschließlich einer Mehr-fachlastausrüstung, einer Energiespeicherausrüstung, einer Photovoltaikausrüstung und eines Lüfters, auf die vorderen und hinteren Busse des bidirektionalen Dual-Aktivbrücken-Gleichstrom-Gleich-strom-Wandlers, und ferner Bestimmen der einzelnen Stabilität eines gegenseitig gekoppelten einzelnen Dual-Energiefluss-Multiport-Energieroutersystems; und wenn das Beurteilungsergebnis Instabilität zeigt, Bestimmen, dass das wechselseitig gekoppelte Einzel-Dual-Energiefluss-Multiport-Energierouter-System in wechselseitiger Hierarchie-Instabilität ist, Ausführen des Schritts 7 oder andernfalls Ausführen von Schritt 6;

Schritt 6: nach der Bestimmung, dass das wechselseitig gekoppelte einzelne Dual-Energiefluss-Multiport-Energieroutersystem durch den Schritt 5 in Einzelstabilität ist, Beurteilen der Stabilität eines gesamten gebündelten Dual-Energiestrom-Multiport-Energieroutersystems, wenn das Beurtei-lungsergebnis Instabilität zeigt, Bestimmen, dass das gebündelte Dual-Energiestrom-Multiport-Energieroutersystem in Gruppenhierarchie-Instabilität der Energierouter ist, Ausführen des Schritts 7 und Durchführen von dreischichtiger Impedanzumformung eines gebündelten Energierouters, so dass das System stabil ist; und

Schritt 7: wenn das gebündelte Einzel-Dual-Energiefluss-Multiport-Energierouter-System in den Schritten 2-6 als instabiles Ergebnis identifiziert wird, Anwendung einer Parameter-Selbstregulierungstechnologie, einer passiven Kopplungsimpedanz-Umformungstechnologie bzw. einer quellenseitigen Kaskadenimpedanz-Umformungstechnologie für Instabilitätsverbindungen auf verschiedenen Schichten in den Schritten 2-6, so dass das System stabil ist:

Schritt 7.1: für ein Phänomen der Selbsthierarchie-Instabilität des Energierouters, nach dem Grundsatz, dass die Systemstabilität umso höher ist, je kleiner der P-Bereichskoeffizient ist, Regulierung des P-Bereichskoeffizienten im Back-End-Gleichstromrichter des einzelnen Energierouters durch eine Arcus-Tangenten-Funktion und erneute Ausführung von Schritt 1;

Schritt 7.2: bei einem Phänomen der Instabilität der wechselseitigen Hierarchie des Energierouters Steuerung der Kaskadenimpedanz auf der Stromversorgungsseite, um die Impedanz eines Untersystems auf der Stromversorgungsseite zu verringern, um die Stabilität des Systems zu erreichen, und, nachdem die Technologie zur Umformung der passiven Kopplungsimpedanz angewandt wurde, erneute Ausführung von Schritt 5; und

Schritt 7.3: Für das Phänomen der Gruppenhierarchie-Instabilität des Energierouters wird die Systemstabilität durch Vergrößerung der Ausgangsadmittanzmatrix auf der Stromversorgungsseite, d.h. durch Verringerung des Ausgangsimpedanzwerts in einem Thevenin-Äquivalenzschaltkreis, und unter der Bedingung, dass der einzelne Energierouter stabil ist, erreicht, den gebündelten Energie-router in die Lage zu versetzen, nur eine niederfrequente Oszillation und eine synchrone Instabilität zu induzieren, aber nicht eine Instabilität des gesamten Frequenzbereichs aufgrund gegenseitiger Kopplung, so dass die entworfene virtuelle Impedanz eine Impedanzumformungstechnologie in einem bestimmten Frequenzbereich annimmt, und nachdem die quellenseitige Kaskadenimpedanz-umformungstechnologie angenommen wurde, den Schritt 6 erneut auszuführen.

2. Verfahren zur Identifizierung und Wiederherstellung der Stabilität eines Mehrkanal-Energierouters nach Anspruch 1, **dadurch gekennzeichnet, dass** der Schritt 5 spezifische Schritte umfasst:

Schritt 5.1: Ermöglichung der Parallelschaltung von n verschiedenen Geräten, einschließlich der neuen Energiegeräte der Multilastanlage, der Energiespeicheranlage, der Photovoltaikanlage und des Lüfters, mit einem vorderen Ende des bidirektionalen Doppel-Aktivbrücken-Gleichstrom-Gleich-strom-Wandlers, ohne Berücksichtigung der unabhängigen Stabilität der Multilastanlage und der Photovoltaikanlage, wobei jede Schnittstelle in dem Energie-Router-System mit mehreren Anschlüssen aufgrund der Existenz der Leitungsimpedanz und des gegenseitigen Kopplungseinflusses der Eingangs-/Ausgangsimpedanz nach der Parallelschaltung der Geräte unabhängig als ein Untermodul betrachtet wird, wobei die Leitungsimpedanz zwischen jeweils zwei Schnittstellen existiert, was es ermöglicht, dass die Struktur einer Schaltung mit mehreren Schnittstellen äquivalent zu derjenigen der Thevenin-Schaltung in der Bildfrequenzkopplung durch einen verallgemeinerten Bandbreiten-Stateminjektor mit kleiner Störung ist, und dass die Systemstabilität durch die Konstruktion einer System-Gesamtbeziehungs-Funktionsmatrix, die sich bis zu einer Peripherie von Schnittstellen erstreckt, und von Polpositionen des Systems im geschlossenen Regelkreis beurteilt wird;

Schritt 5.1.1: Ermöglichen, dass die n Ausrüstungen parallel zu einem Bus an einem vorderen Ende des Front-End-Gleichstromwandlers angeschlossen sind und n Knoten entsprechen, Einstellen jedes Knotens so, dass er eine Stromversorgung und eine Last hat, und Ermöglichen, dass die Leitungsimpedanz zwischen einer Verbindungsleitung von zwei beliebigen Ausrüstungen besteht, wobei die Ausrüstung, die die externe Ausgangscharakteristik hat, Energie nach außen abzugeben, eine Quellenausrüstung genannt wird, und die Ausrüstung, die die externe Ausgangscharakteristik hat, Energie zu verbrauchen, eine Lastausrüstung genannt wird;

Schritt 5.1.2: Modellierung eines Mehrfach-Parallel-Verbindungssystems des Multi-Port-Energie-Routers mit Hilfe eines Matrix-Fractional-Criteria (MFC)-Verfahrens:

erstens, Aufbau einer Beziehungsfunktionsmatrix des gesamten Mehrport-Energieroutersystems, ferner Erhalten der Polpositionen der geschlossenen Schleife des Systems, um die Stabilität des Systems zu beurteilen, und Aufbau einer Beziehungsfunktionsmatrix K(s), die aus n*n Beziehungs-funktionen für das Mehrport-Energierouterystem besteht, das aus den n Teilen von Ausrüstungen besteht, wobei ein Element in der a-ten Zeile a und der b-ten Zeile in der Matrix eine Beziehungsfunktion ist, die zwischen Ausrüstung a und Ausrüstung b aufgebaut ist;

Schritt 5.1.3: Beurteilung eines Nullpunkts und eines Pols, die jedem Knoten in K(s) entsprechen, nach der MFC-Methode, wobei die Beziehungsfunktionsmatrix als Verhältnis zweier Polynom-Matrizen ausgedrückt wird, wobei $N(s)D^{-1}(s)$ und $A^{-1}(s)B(s)$ jeweils eine beliebige rechte MFC und eine beliebige linke MFC sind, die in der gegebenen Beziehungsfunktionsmatrix K(s) nicht vereinfacht werden können, wobei N(s) einen beliebigen rechten MFC-Zählerteil ausdrückt, der in der gegebenen Beziehungsfunktionsmatrix K(s) nicht vereinfacht werden kann, D(s) einen beliebigen rechten Nennerteil ausdrückt, der in der gegebenen Beziehungsfunktionsmatrix K(s) nicht vereinfacht werden kann, A(s) einen beliebigen rechten MFC-Nennerteil ausdrückt, der in der gegebenen Beziehungsfunktionsmatrix K(s) nicht vereinfacht werden kann, und B(s) einen beliebigen rechten MFC-Zählerteil ausdrückt, der in der gegebenen Beziehungsfunktionsmatrix K(s) nicht vereinfacht werden kann, und Ausdrücken des Nullpunkts und des Pols von K(s) als: der Pol von K(s) ist die Wurzel von det D(s)=0 oder die Wurzel von det A(s)=0, und der Nullpunkt von K(s) ist ein s-Wert, der es ermöglicht, N(s) oder B(s) einer Rangreduktion zu unterziehen; und

Schritt 5.1.4: Analysieren des Geräts an einem beliebigen Knoten k, wobei k = 1,···,n , $V_k$ eine Spannung am Knoten k ist, $i_{ok}$ ein von einer Front-End-Gleichstromschaltung ausgegebener Strom ist, $i_{linckj}$ ein Strom zwischen dem Knoten k und einem Knoten j ist, $j$ = 1, ... , n and $j \neq n$ $Z_{loadk}$ eine lokale Lastimpedanz ist, $i_{loadk}$ ein lokaler Laststrom ist, $Z_{linekj}$ eine Leitungsimpedanz zwischen dem Knoten k und dem Knoten j ist, dann lautet eine Gleichung, die eine lokale Lastspannung und den lokalen Laststrom am Knoten k beschreibt:

$$V_k = Z_{loadk} i_{loadk}$$

ist eine Gleichung, die die Spannung und den Strom zwischen dem Knoten k und dem Knoten j beschreibt:

$$V_k - V_j = Z_{linckj} i_{linckj}$$

wobei $V_j$ eine Spannung an dem Knoten j ist;

ist der vom Gleichstromkreis des Front-Ends am Knoten k ausgegebene Strom:

$$i_{ok} = Y_{eqk} (G_k V_k - V_k)$$

wobei $Y_{eqk} = Z_{eqk}^{-1}$ eine Leitungsadmittanz zwischen dem Knoten k und dem Knoten j ist, $Z_{eqk}$ eine Leitungsimpedanz zwischen dem Knoten k und dem Knoten j ist und $G_k$ ein Proportionalitätskoeffizient ist;

ist der Ausdruck für den lokalen Laststrom am Knoten k:

$$i_{loadk} = Y_{loadk} V_k$$

wobei $Y_{loadk} = Z_{loadk}^{-1}$ eine Lastadmittanz und $Z_{loadk}$ eine Lastimpedanz ist;

ist der Ausdruck für den Strom, der vom Knoten k zum Knoten j fließt:

$$i_{linekj} = Y_{linekj}(V_k - V_j)$$

wobei $Y_{linekj} = Z_{linekj}^{-1}$ eine Leitungsadmittanz zwischen dem Knoten k und dem Knoten j ist;

Nach dem Kirchhoff schen Gesetz ist der in den Knoten k fließende Strom gleich dem aus dem Knoten k fließenden Strom, dann

$$i_{ok} = \sum_{j=1, j \neq k}^{n} \left( i_{linekj} + i_{loadk} \right)$$

die Gleichzeitigkeit der oben genannten Formel zu ermöglichen und die äquivalente Impedanz am Knoten k zu erhalten, wie in der folgenden Formel dargestellt:

$$Y_k V_k - \sum_{j=1, j \neq k}^{n} (Y_{linekj} V_j) = Y_{eqk} G_k V_k$$

$$\text{wobei } Y_k = Y_{qek} + Y_{loadk} + \sum_{j=1, j \neq k}^{n} Y_{linekj} ;$$

Ausweitung des Pols der Beziehungsfunktionsmatrix K(s) auf die gesamten Energierouter und ein externes Anlagensystem zur Analyse und Kombination der Kirchhoff schen Formeln an allen Knotenpunkten zur Bildung einer Matrixform:

$$\begin{bmatrix} i_{o1} \\ i_{o2} \\ \cdots \\ i_{on} \end{bmatrix} = \begin{bmatrix} Y_{eq1} & 0 & \cdots & 0 \\ 0 & Y_{eq2} & \cdots & 0 \\ \cdots & \cdots & \cdots & \cdots \\ 0 & 0 & \cdots & Y_{eqn} \end{bmatrix} \cdot \left( \begin{bmatrix} Z_{eq1} G_{cli1} i_{g1} \\ G_{clv2} V_2 \\ \cdots \\ G_{clvn} V_n \end{bmatrix} - \begin{bmatrix} V_1 \\ V_2 \\ \cdots \\ V_n \end{bmatrix} \right)$$

$$\begin{bmatrix} Y_1 & -Y_{line12} & \cdots & -Y_{line1n} \\ -Y_{line21} & Y_2 & \cdots & -Y_{line2n} \\ \cdots & \cdots & \cdots & \cdots \\ -Y_{linen1} & -Y_{linen2} & \cdots & Y_n \end{bmatrix} \cdot \begin{bmatrix} V_1 \\ V_2 \\ \cdots \\ V_n \end{bmatrix} = \begin{bmatrix} Y_{eq1} & 0 & \cdots & 0 \\ 0 & Y_{eq2} & \cdots & 0 \\ \cdots & \cdots & \cdots & \cdots \\ 0 & 0 & \cdots & Y_{eqn} \end{bmatrix} \cdot \begin{bmatrix} Z_{eq1} G_{cli1} i_{g1} \\ G_{clv2} V_2 \\ \cdots \\ G_{clvn} V_n \end{bmatrix}$$

die Gleichzeitigkeit der beiden Formeln zu ermöglichen und die Vereinfachung durchzuführen:

$$\begin{bmatrix} i_{o1} \\ i_{o2} \\ \cdots \\ i_{on} \end{bmatrix} = (Y_{M2} - Y_{M2} Y_{M1}^{-1} Y_{M2}) \cdot \begin{bmatrix} Z_{eq1} G_{cli1} i_{g1} \\ G_{clv2} V_2 \\ \cdots \\ G_{clvn} V_n \end{bmatrix}$$

wobei

$$Y_{M1} = \begin{bmatrix} Y_1 & -Y_{line12} & \cdots & -Y_{line1n} \\ -Y_{line21} & Y_2 & \cdots & -Y_{line2n} \\ \cdots & \cdots & \cdots & \cdots \\ -Y_{linen1} & -Y_{linen2} & \cdots & Y_n \end{bmatrix}, \ Y_{M2} = \begin{bmatrix} Y_{eq1} & 0 & \cdots & 0 \\ 0 & Y_{eq2} & \cdots & 0 \\ \cdots & \cdots & \cdots & \cdots \\ 0 & 0 & \cdots & Y_{eqn} \end{bmatrix}, \ G_{cli}$$

einen stromproportionalen Koeffizienten und $G_{clv}$ einen spannungsproportionalen Koeffizienten ausdrückt;

mit einer Matrix $Y_{M2} - Y_{M2} Y_{M1}^{-1} Y_{M2}$ als Regelkreisfunktionsmatrix K(s) des Energieroutersystems, durch Beurteilung der Stabilität der K(s) nämlich der Stabilität des Systems, Umwandlung der K(s) in eine Matrixmultip-

likationsform,

$$K(s) = Y_{M2} - Y_{M2}Y_{M1}^{-1}Y_{M2} = (Y_{M1}Y_{M2}^{-1})^{-1}(Y_{M1} - Y_{M2})$$

nämlich, $A(s) = Y_{M1}Y_{M2}^{-1}$ , $B(s)$ = $Y_{M1}$ - $Y_{M2}$ ; und

Schritt 5.2: Durchführung einer relativen Primzahlüberprüfung der Beziehungsmatrix K(s) durch eine Rangkriterium-Methode, da $A(s) = Y_{M1}Y_{M2}^{-1}$ und $B(s)$ - $Y_{M1}$ - $Y_{M2}$ quadratische Matrizen der Ordnung n sind, A(s) eine nicht-singuläre Matrix ist, eine Determinante ein Polynom von s ist, rank[A(s)B(s)]=n, und die linken MFC-Bedingungen, die nicht vereinfacht werden können, erfüllt sind, Erhalten der Regelkreise des Systems durch Lösen einer Wurzel von $\det(Y_{M1}Y_{M2}^{-1}) = 0$ ; Beobachten der Anzahl der Pole des geschlossenen Regelkreises auf einer rechten Ebene, wenn die Anzahl der Pole Null ist, Bestimmen, dass das System stabil ist, und wenn die Anzahl der Pole nicht Null ist, Bestimmen, dass das System nicht stabil sein kann; und außerdem, Beurteilen der Position der instabilen Ausrüstung gemäß der Analyse der Position, wo der Pol Null ist, wenn das Beurteilungsergebnis Instabilität zeigt, Bestimmen, dass das Multi-Port-Energie-Router-System in gegenseitiger Hierarchie-Instabilität ist, Ausführen des Schrittes 7, oder andernfalls, Ausführen von Schritt 6.

3. Verfahren zur Identifizierung und Wiederherstellung der Stabilität eines Mehrkanal-Energierouters nach Anspruch 2, **dadurch gekennzeichnet, dass** der Schritt 6 spezifische Schritte umfasst:

Schritt 6.1: wenn das System durch eine gemischte Verbindung von m Energieroutern erhalten wird, Erhalten einer Ausgangsimpedanzmatrix des geclusterten Energieroutersystems durch einen verallgemeinerten Bandbreiten-Strominjektor mit kleiner Störung und Durchführen einer Entrauschungsverarbeitung an dem geclusterten Energieroutersystem durch die folgende Formel, um ein Admittanzmatrix-Flussdiagramm des geclusterten Energieroutersystems zu erhalten,

$$Z_{ij'}^* \begin{bmatrix} 1 & TR_{ij'} \\ TG_{ij'} & 1 \end{bmatrix} Z_{ij'}$$

wobei $TR_{ij'}$ und $TG_{ij'}$ der gegenseitige Widerstand und die gegenseitige Leitfähigkeit zwischen den beiden Energieroutern sind, $i'$ = 1,$\cdots$,m,j =1, $\cdots$,m,i' $\neq$ j' durch Analyse der beiden Energie-router aus verschiedenen Winkeln erhalten werden, $G_{ij'}$ und $G_{ij'}$ zwei Gruppen von Thevenin-äquivalenten Ausgangsadmittanzmatrizen sind, die durch Analyse der beiden Energierouter aus verschiedenen Winkeln erhalten werden, $Z_{ij'}$ eine äquivalente Ausgangsimpedanzmatrix von dem i$_{th}$ Energierouter zu dem j$_{th}$ Energierouter ist, und $Z_{ij'}^*$ eine transponierte Matrix von $Z_{ij'}$ ist; und

Schritt 6.2: Nach einer Relevanz- und Systemstabilitätsbedingung einer Zulässigkeitsmatrix, wenn in den Schritten 1-5 festgestellt wird, dass sich das System in Selbsthierarchiestabilität und Gegenseitigkeitshierarchiestabilität befindet und die folgende Formel keine rechten Pole aufweist:

$$f(m) = \prod_{i',j=1}^m \frac{G_{ij}G_{ji'}}{G_{ij'} + G_{ji'}}$$

Bestimmen, dass das gebündelte Dual-Energiefluss-Multiport-Energierouter-System stabil ist, andernfalls Bestimmen, dass das gebündelte Dual-Energiestrom-Multiport-Energierouter-System in der Gruppenhierarchie-Instabilität der Energierouter ist, Ausführen des Schritts 7 und Durchführen einer dreischichtigen Impedanzumformung des gebündelten Energierouters, so dass das System stabil ist.

4. Verfahren zur Identifizierung und Wiederherstellung der Stabilität einer selbständigen Gruppe mit mehreren Niveaus für einen Energie-Router mit mehreren Anschlüssen nach Anspruch 3, **dadurch gekennzeichnet, dass** in Schritt 7.1 der Droop-Steuerkoeffizient in dem Back-End-Gleichstrom-wandler des einzelnen Energie-Routers durch die Arcus-Tangens-Funktion reguliert wird, wie in der folgenden Formel gezeigt:

$$R = R_0 \left[ 1 - k_1 \arctan\left( \frac{R - R_0}{R_0} k_2 \pi + \Gamma + \frac{1}{2}\pi \right) \right]$$

wobei $R$ den Durchhangskoeffizienten ausdrückt, $R_0$ einen anfänglichen Durchhangskoeffizienten ausdrückt, $k_1$ und $k_2$ Proportionalitätskoeffizienten sind und $\Gamma$ ein Verschiebungskoeffizient ist.

5. Verfahren zur Identifizierung der Stabilität und zur Wiederherstellung der Stabilität eines Mehr-kanal-Energierouters nach Anspruch 4, **dadurch gekennzeichnet, dass** der Schritt 7.2 der Steuerung der netzseitigen Kaskadenimpedanz zur Verringerung der Impedanz des netzseitigen Teilsystems, um die Stabilität des Systems zu erreichen, spezifische Teilschritte umfasst:

wodurch der Front-End-Gleichstromwandler oder der bidirektionale Doppel-Aktivbrücken-Gleichstromwandler gleichwertig zu einem verallgemeinerten Gleichrichter ist, wobei ein Eular-Largrange-Modell wie folgt ausgedrückt wird:

$$\begin{bmatrix} L_n & 0 & 0 \\ 0 & L_n & 0 \\ 0 & 0 & 2C_d \end{bmatrix} \begin{bmatrix} \dot{i_d} \\ i_q \\ u_{dc} \end{bmatrix} + \begin{bmatrix} 0 & -\omega L_n & S_d \\ \omega L_n & 0 & S_q \\ -S_d & -S_q & 0 \end{bmatrix} \begin{bmatrix} i_d \\ i_q \\ u_{dc} \end{bmatrix} + \begin{bmatrix} R_n & 0 & 0 \\ 0 & R_n & 0 \\ 0 & 0 & \dfrac{2}{R_d} \end{bmatrix} \begin{bmatrix} i_d \\ i_q \\ u_{dc} \end{bmatrix} = \begin{bmatrix} u_d \\ u_q \\ 0 \end{bmatrix}$$

wobei $L_n, R_n, C_d, R_d$ eine äquivalente Induktivität und ein äquivalenter Widerstand des vorderen Endes des verallgemeinerten Gleichrichters bzw. eine äquivalente Induktivität und ein äquivalenter Widerstand des hinteren Endes des verallgemeinerten Gleichrichters sind, $u_{dc}, i_d, i_q$ eine Gleich-spannung des vorderen Endes bzw. ein dq-Axialstrom des verallgemeinerten Gleichrichters sind, $u_d, u_q$ eine dq-Axialspannung einer Ausgangsseite des Gleichrichters sind, $S_d$ bzw. $S_q$ die Schalt-häufigkeit in einem d-q-Koordinatensystem ausdrücken und $\omega$ eine Winkelgeschwindigkeit des Energie-Routersystems mit mehreren Anschlüssen ausdrückt;
Vereinfachung der obigen Formel als:

$$M\dot{x} + Jx + Rx = u$$

wobei,

$$M = \begin{bmatrix} L_n & 0 & 0 \\ 0 & L_n & 0 \\ 0 & 0 & 2C_d \end{bmatrix} \quad J = \begin{bmatrix} 0 & -\omega L_n & S_d \\ \omega L_n & 0 & S_q \\ -S_d & -S_q & 0 \end{bmatrix} \quad R = \begin{bmatrix} R_n & 0 & 0 \\ 0 & R_n & 0 \\ 0 & 0 & \dfrac{2}{R_d} \end{bmatrix}$$

$$x = \begin{bmatrix} i_d \\ i_q \\ u_{dc} \end{bmatrix}, u = \begin{bmatrix} u_d \\ u_q \\ 0 \end{bmatrix}$$

und jeweils die Zustandsvariable und die Endgerätesteuerung des Energie-Routersystems mit mehreren Anschlüssen ausdrücken;
die ideale Zustandsvariable des Multi-Port-Energie-Routersystems wie folgt ausdrückt:

$$x_{ref} = \left[ x_{ref1}, x_{ref2}, x_{ref3} \right] = \left[ \frac{1}{2} \left[ \frac{U_m}{R_n} - \sqrt{\left( \frac{U_m}{R_n} \right)^2 - \frac{8u_{dc}^2}{R_d R_n}} \right], 0, u_{dc} \right]$$

wobei $u_{dc}$ eine gleichstromseitige Spannung des Mehrkanal-Energieroutersystems ausdrückt, $x_{ref}$ eine ideale Zustandsvariable ist und $U_m$ eine größte Ausgangsspannung des verallgemeinerten Gleichrichters ist; Konstruktion einer Energiefunktion eines Zustandsvariablenfehlers $x_e = x_{ref} - x$ als:

$$H_e = \frac{1}{2} x_e^T M x_e$$

Daher kann das Eular-Largrange-Modell des verallgemeinerten Gleichrichters wie folgt umge-schrieben werden:

$$M\dot{x}_e + Rx_e = -u + Jx + M\dot{x}_e + Rx_{ref} + M\dot{x}_{ref}$$

um zu gewährleisten, dass die Fehler des Mehrkanal-Energieroutersystems konstant gegen 0 konvergieren, wird ein Dämpfungsfaktor eingeführt, wie in der folgenden Formel dargestellt:

$$R_d x_e = \left( R + R_p \right) x_e$$

wobei $R_p$ einen Dämpfungsinjektionsfaktor ausdrückt, der eine symmetrische positiv definite Dämpfungsmatrix ist, nämlich

$$R_p = \begin{bmatrix} r_{p1} & & \\ & r_{p1} & \\ & & \dfrac{2}{r_{p3}} \end{bmatrix}$$

wobei $r_{p1}$ -$r_{p3}$ alle einen virtuellen Einspritzwiderstand ausdrücken;
durch die Regulierung von $R_p$, die Gewährleistung eines direkten Lyapunov-Stabilitätskriteriums und die Erlangung einer Strategie zur Wiederherstellung der Stabilität der Energierouter auf der Grundlage einer gegenseitigen Hierarchie.

6. Verfahren zur Identifizierung und Wiederherstellung der Stabilität eines Mehrtor-Energierouters nach Anspruch 5, **dadurch gekennzeichnet, dass** in Schritt 7.3 der spezifische Ausdruck der Impedanzumformungstechnologie im spezifischen Frequenzbereich als die folgende Formel dargestellt wird:

$$Z_{vir} = \frac{-2K \left( 2\pi f_{lo} \right) s}{s^2 + 2 \left( 2\pi f_{lo} \right) s + \left( 2\pi f_{on} \right)^2}$$

wobei $(f_{on} - f_{lo}, f_{on} + f_{lo})$ einen Instabilitätsfrequenzbereich, $K$ einen Dämpfungskoeffizienten, $Z_{vir}$ eine virtuelle Impedanz, $f_{lo}$ eine untere Frequenzgrenze, $f_{on}$ eine obere Frequenzgrenze und s einen Laplace-Multiplikator ausdrückt.

## Revendications

1. Procédé d'identification de la stabilité et de rétablissement de la stabilité pour un routeur d'énergie à ports multiples, **caractérisé par** les étapes suivantes:

étape 1: initialisation des paramètres du système sur un système de routeur d'énergie multiport à double flux d'énergie unique à détecter, les paramètres du système comprenant une valeur de résistance, une valeur d'inductance, une valeur de capacité, une impédance de ligne et une fréquence de commutation de trois sous-systèmes d'un convertisseur DC frontal, d'un convertisseur DC-DC bidirectionnel à double pont actif et d'un convertisseur AC/DC dorsal comprenant un convertisseur AC dorsal et un convertisseur DC dorsal dans le routeur d'énergie multiport du système de routeur d'énergie, ainsi que les paramètres de l'équipement de stockage d'énergie et de l'équipement photo-voltaïque au niveau des interfaces multiples;

étape 2: construction d'un modèle mathématique Eular-Lagrange en fonction d'une structure topologique du convertisseur DC frontal, calcul d'une fonction de transfert en fonction du modèle mathématique du convertisseur DC frontal, évaluation de la stabilité d'un convertisseur dC frontal du système de routeur d'énergie multiport, si le résultat de l'évaluation montre une instabilité, détermination que le système de routeur d'énergie multiport est en instabilité d'auto-hiérarchie, exécution de l'étape 7, ou bien, exécution de l'étape 3;

étape 3: construction d'un modèle mathématique Eular-Lagrange en fonction d'une structure topologique du convertisseur DC-DC bidirectionnel à double pont actif, calcul d'une fonction de transfert en fonction du modèle mathématique du convertisseur DC-DC bidirectionnel à double pont actif, évaluation supplémentaire de la stabilité, si le résultat de l'évaluation montre une instabilité, détermination que le système de routeur d'énergie multiport est en instabilité auto-hiérarchique, exécution de l'étape 7, ou bien, exécution de l'étape 4;

étape 4: construction d'un modèle mathématique Eular-Lagrange en fonction d'une structure topologique de circuit du convertisseur AC/DC arrière, calcul d'une fonction de transfert en fonction du modèle mathématique du convertisseur AC/DC arrière, évaluation de la stabilité du convertisseur AC/DC arrière en fonction d'une courbe de Nyquist de la fonction de transfert, si le résultat de l'évaluation montre une instabilité, détermination que le système de routeur d'énergie multi-port est en instabilité auto-hiérarchique, exécution de l'étape 7, ou sinon, exécution de l'étape 5;

étape 5: après avoir déterminé qu'un sous-système de base indépendant à trois niveaux du système de routeur d'énergie multiport à double flux est stable à l'issue des étapes 2 à 4, permettre à de nouveaux équipements énergétiques, notamment un équipement multicharge, un équipement de stockage d'énergie, un équipement photovoltaïque et un ventilateur, d'accéder aux bus avant et arrière du convertisseur DC-DC bidirectionnel à double pont actif, et déterminer en outre la stabilité unique d'un système de routeur d'énergie multiport à double flux mutuellement couplé; et si le résultat de l'évaluation montre une instabilité, déterminer que le système de routeur d'énergie multiport à double flux énergétique mutuellement couplé est en instabilité hiérarchique mutuelle, exécuter l'étape 7, ou bien exécuter l'étape 6;

étape 6: après avoir déterminé que le système de routeur énergétique multiport à double flux énergétique mutuellement couplé est en stabilité simple par l'étape 5, évaluer la stabilité d'un système entier de routeur énergétique multiport à double flux énergétique en grappe, si le résultat de l'évaluation montre une instabilité, déterminer que le système de routeur énergétique multiport à double flux énergétique en grappe est en instabilité de hiérarchie de groupe des routeurs énergétiques, exécuter l'étape 7, et effectuer un remodelage d'impédance à trois couches d'un routeur énergétique en grappe de manière à ce que le système soit stable; et

étape 7: si le système de routeur énergétique multiport à flux d'énergie unique et double est identifié aux étapes 2 à 6 comme présentant un résultat d'instabilité, adopter respectivement une technologie d'autorégulation des paramètres, une technologie de remodelage de l'impédance de couplage passif et une technologie de remodelage de l'impédance en cascade du côté de la source pour les liens d'instabilité à différentes couches aux étapes 2 à 6 de manière à ce que le système soit stable:

étape 7.1: en cas de phénomène d'instabilité de l'auto-hiérarchie du routeur énergétique, selon le principe que plus le coefficient de statisme est faible, plus la stabilité du système est élevée, en régulant le coefficient de contrôle du statisme dans le convertisseur DC dorsal du routeur énergétique unique par le biais d'une fonction d'arc tangente, et en exécutant à nouveau l'étape 1;

étape 7.2: pour un phénomène d'instabilité de la hiérarchie mutuelle du routeur énergétique, contrôler l'impédance de la cascade côté alimentation électrique pour réduire l'impédance d'un sous-système côté alimentation électrique afin d'assurer la stabilité du système, et après l'adoption de la technologie de remodelage de l'impédance du couplage passif, exécuter à nouveau l'étape 5; et

étape 7.3: pour un phénomène d'instabilité de groupe-hiérarchie du routeur d'énergie, réaliser la stabilité du système en élargissant une matrice d'admittance de sortie du côté de l'alimentation, c'est-à-dire en réduisant une valeur d'impédance de sortie dans un circuit équivalent de Thevenin, et dans la circonstance où le routeur d'énergie unique est stable, permettre au routeur énergétique en grappe d'induire uniquement une oscillation à basse fréquence et une instabilité synchrone, mais pas une instabilité de l'ensemble du domaine de fréquence due au couplage mutuel, de sorte que l'impédance virtuelle conçue adopte une technologie de remodelage de l'impédance dans un domaine de fréquence spécifique, et après l'adoption de la technologie de remodelage de l'impédance en cascade du côté de la source, exécuter à nouveau l'étape 6.

**2.** Procédé d'identification de la stabilité et de rétablissement de la stabilité pour un routeur d'énergie à ports multiples selon la revendication 1, **caractérisé par le fait que** l'étape 5 comprend des étapes spécifiques:

étape 5.1: permettre à n équipements différents, y compris les nouveaux équipements énergétiques de l'équipement multicharge, l'équipement de stockage d'énergie, l'équipement photo-voltaïque et le ventilateur, d'être connectés en parallèle à une extrémité avant du convertisseur DC-DC bidirectionnel à double pont actif, sans tenir compte de la stabilité indépendante de l'équipement multicharge et de l'équipement photovoltaïque, en prenant indépendamment chaque interface dans le système de routeur d'énergie multiport comme un sous-module en raison de l'existence de l'impédance de ligne et de l'influence de couplage mutuel de l'impédance d'entrée/sortie après la connexion en parallèle des équipements, dans lequel l'impédance de ligne existe entre deux interfaces, permettant à la structure d'un circuit multi-interface d'être équivalente à celle du circuit de Thevenin dans le couplage de fréquence d'image par le biais d'un injecteur de courant à faible perturbation de largeur de bande généralisée, et juger de la stabilité du système par la construction d'une matrice de fonction de relation entière du système s'étendant à une périphérie des interfaces, et des positions polaires en boucle fermée du système;

étape 5.1.1: permettre aux n équipements d'être connectés en parallèle à un bus à l'extrémité avant du convertisseur DC frontal et de correspondre à n noeuds, régler chaque noeud pour qu'il ait une alimentation électrique et une charge, et permettre à l'impédance de ligne d'exister entre une ligne de connexion de deux équipements quelconques, l'équipement ayant la caractéristique externe de sortie d'énergie vers l'extérieur étant appelé équipement source, et l'équipement ayant la caracté-ristique externe de sortie de consommer de l'énergie étant appelé équipement de charge;

étape 5.1.2: modélisation d'un système de connexion parallèle multiple du routeur d'énergie multiport par le procédé du critère de fractionnement de la matrice (MFC):

premièrement, construire une matrice de fonctions de relation pour l'ensemble du système de routeur énergétique multiport, obtenir en outre les positions des pôles en boucle fermée du système afin d'évaluer la stabilité du système, et construire une matrice de fonctions de relation K(s) composée de n*n fonctio/ns de relation pour le système de routeur énergétique multiport composé des n équipements, dans laquelle un élément de la a-ème ligne et de la b-ème ligne de la matrice est une fonction de relation construite entre l'équipement a et l'équipement b;

étape 5.1.3: déterminer un point zéro et un pôle correspondant à chaque noeud de la matrice K(s) par la procédé MFC, en exprimant la matrice de la fonction de relation comme un rapport de deux matrices polynomiales, en fixant $N(s)D^{-1}(s)$ et $A^{-1}(s)B(s)$ comme étant respectivement tout MFC de droite et tout MFC de gauche qui ne peuvent pas être simplifiés dans la matrice de la fonction de relation K(s) donnée, où N(s) exprime une partie numératrice MFC de droite qui ne peut pas être simplifiée de la matrice de la fonction de relation K(s) donnée, D(s) exprime une partie dénominateur droite quelconque qui ne peut être simplifiée dans la matrice de fonctions de relation K(s) donnée, A(s) exprime une partie dénominateur MFC droite quelconque qui ne peut être simplifiée dans la matrice de fonctions de relation K(s) donnée, et B(s) exprime une partie numérateur MFC droite quelconque qui ne peut être simplifiée dans la matrice de fonctions de relation K(s) donnée, et

exprimer le point zéro et le pôle de K(s) comme: le pôle de K(s) est la racine de det D(s)=0 ou la racine de det A(s)=0, et le point zéro de K(s) est une valeur s permettant de soumettre le N(s) ou le B(s) à une réduction de classement; et

étape 5.1.4: analyse de l'équipement à n'importe quel noeud k, dans laquelle $k = 1,\cdots,n$ , $V_k$ est une tension au noeud k, $i_{ok}$ est un courant de sortie d'un circuit CC frontal, $i_{linckj}$ est un courant entre le noeud k et un noeud j, $j = 1, ..., n$ and $j \neq n$ $Z_{loadk}$ est une impédance de charge locale, $i_{loadk}$ est un courant de charge local, $z_{linekj}$ est une impédance de ligne entre le noeud k et le noeud j,

l'équation décrivant la tension et le courant de la charge locale au noeud k est alors la suivante:

$$V_k = Z_{loadk} i_{loadk}$$

une équation décrivant la tension et le courant entre le noeud k et le noeud j est:

$$V_k - V_j = Z_{linckj} i_{linckj}$$

où $V_j$ est une tension au noeud j ;
la sortie de courant du circuit DC frontal au noeud k est:

$$i_{ok} = Y_{eqk}(G_k V_k - V_k)$$

où $Y_{eqk} = Z_{eqk}^{-1}$ est une admittance de ligne entre le noeud k et le noeud j, $Z_{eqk}$ est une impédance de ligne entre le noeud k et le noeud j, et $G_k$ est un coefficient proportionnel;
l'expression du courant de charge local au noeud k est:

$$i_{loadk} = Y_{loadk} V_k$$

où $Y_{loadk} = Z_{loadk}^{-1}$ est une admittance de charge, et $Z_{loadk}$ est une impédance de charge;
l'expression du courant circulant du noeud k au noeud j est:

$$i_{linekj} = Y_{linekj}(V_k - V_j)$$

où $Y_{linekj} = Z_{linekj}^{-1}$ est une admittance de ligne entre le noeud k et le noeud j;
selon la loi de Kirchhoff, le courant entrant dans le noeud k est égal au courant sortant du noeud k, alors

$$i_{ok} = \sum_{j=1, j\neq k}^{n} \left( i_{linekj} + i_{loadk} \right)$$

permettant la simultanéité de la formule précitée et l'obtention de l'impédance équivalente au noeud k, comme le montre la formule suivante:

$$Y_k V_k - \sum_{j=1, j\neq k}^{n} (Y_{linekj} V_j) = Y_{eqk} G_k V_k$$

où

$$Y_k = Y_{qek} + Y_{loadk} + \sum_{j=1, j\neq k}^{n} Y_{linekj} \; ;$$

étendre le pôle de la matrice de la fonction de relation K(s) à l'ensemble des routeurs d'énergie et à un système d'équipement externe à des fins d'analyse, et combiner les formules de Kirchhoff à tous les noeuds pour obtenir une forme matricielle:

$$\begin{bmatrix} i_{o1} \\ i_{o2} \\ \cdots \\ i_{on} \end{bmatrix} = \begin{bmatrix} Y_{eq1} & 0 & \cdots & 0 \\ 0 & Y_{eq2} & \cdots & 0 \\ \cdots & \cdots & \cdots & \cdots \\ 0 & 0 & \cdots & Y_{eqn} \end{bmatrix} \cdot \left( \begin{bmatrix} Z_{eq1} G_{cli1} i_{g1} \\ G_{clv2} V_2 \\ \cdots \\ G_{clvn} V_n \end{bmatrix} - \begin{bmatrix} V_1 \\ V_2 \\ \cdots \\ V_n \end{bmatrix} \right)$$

$$\begin{bmatrix} Y_1 & -Y_{line12} & \cdots & -Y_{line1n} \\ -Y_{line21} & Y_2 & \cdots & -Y_{line2n} \\ \cdots & \cdots & \cdots & \cdots \\ -Y_{linen1} & -Y_{linen2} & \cdots & Y_n \end{bmatrix} \cdot \begin{bmatrix} V_1 \\ V_2 \\ \cdots \\ V_n \end{bmatrix} = \begin{bmatrix} Y_{eq1} & 0 & \cdots & 0 \\ 0 & Y_{eq2} & \cdots & 0 \\ \cdots & \cdots & \cdots & \cdots \\ 0 & 0 & \cdots & Y_{eqn} \end{bmatrix} \cdot \begin{bmatrix} Z_{eq1} G_{cli1} i_{g1} \\ G_{clv2} V_2 \\ \cdots \\ G_{clvn} V_n \end{bmatrix}$$

permettre la simultanéité des deux formules et la simplification:

$$\begin{bmatrix} i_{o1} \\ i_{o2} \\ \cdots \\ i_{on} \end{bmatrix} = (Y_{M2} - Y_{M2}Y_{M1}^{-1}Y_{M2}).\begin{bmatrix} Z_{eq1}G_{cli1}i_{g1} \\ G_{clv2}V_2 \\ \cdots \\ G_{clvn}V_n \end{bmatrix}$$

où

$$Y_{M1} = \begin{bmatrix} Y_1 & -Y_{line12} & \cdots & -Y_{line1n} \\ -Y_{line21} & Y_2 & \cdots & -Y_{line2n} \\ \cdots & \cdots & \cdots & \cdots \\ -Y_{linen1} & -Y_{linen2} & \cdots & Y_n \end{bmatrix} , \quad Y_{M2} = \begin{bmatrix} Y_{eq1} & 0 & \cdots & 0 \\ 0 & Y_{eq2} & \cdots & 0 \\ \cdots & \cdots & \cdots & \cdots \\ 0 & 0 & \cdots & Y_{eqn} \end{bmatrix} G_{cli}$$

exprime un coefficient proportionnel au courant, et $G_{clv}$ exprime un coefficient proportionnel à la tension;

avec une matrice $Y_{M2} - Y_{M2}Y_{M1}^{-1}Y_{M2}$ comme matrice de fonction de relation en boucle fermée K(s) du système d'acheminement de l'énergie, en évaluant la stabilité de K(s), c'est-à-dire la stabilité du système, en convertissant K(s) en une forme de multiplication matricielle,

$$K(s) = Y_{M2} - Y_{M2}Y_{M1}^{-1}Y_{M2} = (Y_{M1}Y_{M2}^{-1})^{-1}(Y_{M1} - Y_{M2})$$

à savoir, $A(s) = Y_{M1}Y_{M2}^{-1}$ $B(s) = Y_{M1} - Y_{M2}$; et

étape 5.2: vérification de la primauté relative de la matrice de relation K(s) par une procédé de critère de classement, car $A(s) = Y_{M1}Y_{M2}^{-1}$ et $B(s) = Y_{M1} - Y_{M2}$ sont des matrices carrées d'ordre n, A(s) est une matrice non singulière, un déterminant est un polynôme de s, rank[A(s)B(s)]=n, et les conditions MFC de gauche qui ne peuvent pas être simplifiées sont remplies, obtention des pôles en boucle fermée du système par la résolution d'une racine de $\det(Y_{M1}Y_{M2}^{-1}) = 0$ ; observer le nombre de pôles en boucle fermée sur un plan droit, lorsque le nombre de pôles est nul, déterminer que le système est stable, et si le nombre de pôles n'est pas nul, déterminer que le système ne peut pas être stable ; et en outre, juger la position de l'équipement instable selon l'analyse de la position où le pôle est nul, si le résultat du jugement montre une instabilité, déterminer que le système de routeur d'énergie multiport est en instabilité de hiérarchie mutuelle, exécuter l'étape 7, ou sinon, exécuter l'étape 6.

3. Procédé d'identification de la stabilité et de rétablissement de la stabilité pour un routeur d'énergie à ports multiples selon la revendication 2, **caractérisée par le fait que** l'étape 6 comprend des étapes spécifiques:

étape 6.1: lorsque le système est obtenu par une connexion mixte de m routeurs d'énergie, obtention d'une matrice d'impédance de sortie du système de routeurs d'énergie en grappe par le biais d'un injecteur de courant à faible perturbation à bande passante généralisée, et traitement de débruitage sur le système de routeurs d'énergie en grappe par le biais de la formule suivante pour obtenir un diagramme de flux de matrice d'admittance du système de routeurs d'énergie en grappe,

$$Z_{ij'}^{*}\begin{bmatrix} 1 & TR_{ij'} \\ TG_{ij'} & 1 \end{bmatrix} Z_{ij'}$$

où $TR_{ij'}$ et $TG_{ij'}$ sont la résistance mutuelle et la conductance mutuelle entre les deux routeurs d'énergie, $i' = 1,\cdots,m$, $j = 1,\cdots,m, i' \neq j'$, par l'analyse des deux routeurs d'énergie sous des angles différents, $G_{ij'}$ et $G_{jj'}$, qui sont obtenus, sont deux groupes de matrices d'admittance de sortie équivalente de Thevenin obtenues par l'analyse des deux routeurs d'énergie sous des angles différents, $Z_{ij'}$ est une matrice d'impédance de sortie équivalente du routeur d'énergie $i_{th}$ au routeur d'énergie $j_{th}$ , et $Z_{i'j'}^*$ est une matrice transposée de $Z_{i'j'}$; et

étape 6.2: en fonction de la pertinence et des caractéristiques de stabilité du système d'une matrice d'admittance, lorsque les étapes 1 à 5 déterminent que le système est stable en auto-hiérarchie et en hiérarchie mutuelle et que la formule suivante n'a pas de pôles droits:

$$f\left(m\right) = \prod_{i',j'=1}^{m} \frac{G_{i'j'} G_{j'i'}}{G_{i'j'} + G_{j'i'}}$$

déterminer que le système de routeur énergétique multiport à double flux énergétique en grappe est stable, sinon, déterminer que le système de routeur énergétique multiport à double flux énergétique en grappe est dans l'instabilité de la hiérarchie de groupe des routeurs énergétiques, exécuter l'étape 7, et effectuer un remodelage de l'impédance à trois couches du routeur énergétique en grappe de sorte que le système soit stable.

4. Procédé d'identification de la stabilité et de rétablissement de la stabilité pour un routeur d'énergie multiport selon la revendication 3, **caractérisé par le fait qu'**à l'étape 7.1, le coefficient de contrôle du statisme dans le convertisseur CC arrière du routeur d'énergie unique est régulé par la fonction arc tangente, comme indiqué dans la formule suivante:

$$R = R_0 \left[ 1 - k_1 \arctan\left( \frac{R - R_0}{R_0} k_2 \pi + \Gamma + \frac{1}{2} \pi \right) \right]$$

où $R$ exprime le coefficient de statisme, $R_0$ exprime un coefficient de statisme initial, $k_1$ et $k_2$ sont des coefficients proportionnels, et $\Gamma$ est un coefficient de décalage.

5. Procédé d'identification de la stabilité et de rétablissement de la stabilité pour un routeur d'énergie multiport selon la revendication 4, **caractérisé par le fait que** l'étape 7.2 de contrôle de l'impédance de la cascade côté alimentation électrique pour réduire l'impédance du sous-système côté alimen-tation électrique afin d'assurer la stabilité du système comprend des sous-étapes spécifiques:

permettre au convertisseur DC frontal ou au convertisseur DC-DC bidirectionnel à double pont actif d'être équivalent à un redresseur généralisé, dans lequel un modèle Eular-Largrange est exprimé comme suit:

$$\begin{bmatrix} L_n & 0 & 0 \\ 0 & L_n & 0 \\ 0 & 0 & 2C_d \end{bmatrix} \begin{bmatrix} \dot{i_d} \\ i_q \\ u_{dc} \end{bmatrix} + \begin{bmatrix} 0 & -\omega L_n & S_d \\ \omega L_n & 0 & S_q \\ -S_d & -S_q & 0 \end{bmatrix} \begin{bmatrix} i_d \\ i_q \\ u_{dc} \end{bmatrix} + \begin{bmatrix} R_n & 0 & 0 \\ 0 & R_n & 0 \\ 0 & 0 & \dfrac{2}{R_d} \end{bmatrix} \begin{bmatrix} i_d \\ i_q \\ u_{dc} \end{bmatrix} = \begin{bmatrix} u_d \\ u_q \\ 0 \end{bmatrix}$$

où $L_n, R_n, C_d, R_d$ est respectivement l'inductance et la résistance équivalentes de l'extrémité avant du redresseur généralisé, et l'inductance et la résistance équivalentes de l'extrémité arrière du redresseur généralisé, $u_{dc}, i_d, i_q$ est respectivement la tension DC de l'extrémité avant et le courant axial dq du redresseur généralisé, $u_d, u_q$ est respectivement la tension axiale dq d'un côté de sortie du redresseur, $S_d$ et $S_q$ expriment respectivement les cycles de service de commutation dans un système de coordonnées d-q, et $\omega$ exprime une vitesse angulaire du système de routeur d'énergie à ports multiples;
en simplifiant la formule ci-dessus comme suit:

$$M\dot{x} + Jx + Rx = u$$

où

$$, M = \begin{bmatrix} L_n & 0 & 0 \\ 0 & L_n & 0 \\ 0 & 0 & 2C_d \end{bmatrix} \quad J = \begin{bmatrix} 0 & -\omega L_n & S_d \\ \omega L_n & 0 & S_q \\ -S_d & -S_q & 0 \end{bmatrix} \quad R = \begin{bmatrix} R_n & 0 & 0 \\ 0 & R_n & 0 \\ 0 & 0 & \dfrac{2}{R_d} \end{bmatrix}$$

$$x = \begin{bmatrix} i_d \\ i_q \\ u_{dc} \end{bmatrix}, u = \begin{bmatrix} u_d \\ u_q \\ 0 \end{bmatrix}$$

et expriment respectivement la variable d'état et la commande terminale du système de routeur d'énergie à ports multiples;

exprimer la variable d'état idéale du système de routeur d'énergie multi-port comme:

$$x_{ref} = \begin{bmatrix} x_{ref1}, x_{ref2}, x_{ref3} \end{bmatrix} = \begin{bmatrix} \dfrac{1}{2} \begin{bmatrix} \dfrac{U_m}{R_n} - \sqrt{\left(\dfrac{U_m}{R_n}\right)^2 - \dfrac{8u_{dc}^2}{R_d R_n}} \end{bmatrix}, 0, u_{dc} \end{bmatrix}$$

où, $u_{dc}$ exprime une tension côté DC du système de routeur d'énergie multi-port, $x_{ref}$ est une variable d'état idéale, et $U_m$ est une tension de sortie la plus élevée du redresseur généralisé;

la construction d'une fonction d'énergie d'une variable d'état, l'erreur $x_e = x_{ref} - x$, comme suit:

$$H_e = \frac{1}{2} x_e^T M x_e$$

Par conséquent, en réécrivant le modèle Eular-Largrange du redresseur généralisé comme suit:

$$M \dot{x}_e + R x_e = -u + Jx + M \dot{x}_e + R x_{ref} + M \dot{x}_{ref}$$

pour garantir que les erreurs du système de routeur d'énergie multiport convergent systématiquement vers 0, en introduisant un facteur d'injection d'amortissement comme indiqué dans la formule suivante:

$$R_d x_e = \left( R + R_p \right) x_e$$

où, $R_p$ exprime un facteur d'injection d'amortissement qui est une matrice d'amortissement symétrique définie positive, à savoir

$$R_p = \begin{bmatrix} r_{p1} & & \\ & r_{p1} & \\ & & \dfrac{2}{r_{p3}} \end{bmatrix}$$

où, $r_{p1}$-$r_{p3}$ expriment tous une résistance virtuelle à l'injection;

en régulant $R_p$, en garantissant un critère de stabilité direct de Lyapunov et en obtenant une stratégie de contrôle de rétablissement de la stabilité par hiérarchie mutuelle des routeurs d'énergie.

6. Procédé d'identification de la stabilité et de rétablissement de la stabilité pour un routeur d'énergie multiport selon la revendication 5, **caractérisé par le fait qu'**à l'étape 7.3, l'expression spécifique de la technologie de remodelage de l'impédance dans le domaine de fréquence spécifique est présentée sous la forme de la formule suivante :

$$Z_{vir} = \frac{-2K\left(2\pi f_{lo}\right)s}{s^2 + 2\left(2\pi f_{lo}\right)s + \left(2\pi f_{on}\right)^2}$$

où ($f_{on}$ - $f_{lo}$, $f_{on}$ + $f_{lo}$) exprime une gamme de fréquences d'instabilité, $K$ exprime un coefficient d'atténuation, $Z_{vir}$ exprime une impédance virtuelle, $f_{lo}$ exprime une limite de fréquence infé-rieure, $f_{on}$ exprime une limite de fréquence supérieure, et s exprime un multiplicateur de Laplace.

FIG. 1

```
                              ( Start )
                                 │
                                 ▼
        ┌────────────────────────────────────────┐
        │ acquire system parameters of energy routers, convert │
        │ the acquired system parameters into digital signals, │
        │   perform processing, and transmit the processed     │
        │ digital signals to a data storage unit for preservation │
        └────────────────────────────────────────┘
                                 │
                                 ▼
                                          ┌──────────────┐
        ┌────────────────────────────┐    │  coefficient  │
        │ perform parameter initialization of energy routers, │  │ self-regulation │
        │  construct an Eular-Lagrange model of a subset │    │   technology   │
 Self stability │ system, and recognize system stability through a host │   └──────────────┘
 identification of │              computer              │
 sub-modules of └────────────────────────────┘
 energy routers               │
                              ▼           No
                         ◇ stable or not ◇────────────────►
                              │
                        ····· Yes ·····
                              ▼
                   ┌──────────────────┐
                   │ construct a mutual coupling dual │
                   │ Thevenin's image frequency │
                   │ coupling equivalent model of a │
                   │ dual energy flow multi-port │
                   │        energy router       │
                   └──────────────────┘
                              │
                              ▼
                   ┌──────────────────┐           ┌──────────┐
                   │ judge system stability through a │           │  passive  │
 mutual coupling  │ Z+Z dual active impedance │           │ coupling  │
 stability        │  recognition technology │           │ impedance │
 identification of └──────────────────┘           │ reshaping │
 energy routers               │                        └──────────┘
                              ▼           No
                         ◇ stable or not ◇────────────────►
                              │
                        ---- Yes ----
                              ▼
                   ┌──────────────────┐
                   │ use a circuit topology, analyze a │
                   │  coupling function between │
                   │  equipment, and construct a │
                   │ system transfer relationship │
                   │           matrix          │
                   └──────────────────┘
                              │
                              ▼
                   ┌──────────────────┐           ┌──────────┐
 stability        │ use an MFC method, transfer a relationship │           │ source side │
 identification of │ matrix in a fractional manner, adopt the │           │  cascade  │
 clustered energy │ situation of poles of the system, and │           │ impedance │
 routers          │ recognize the stability of the clustered │           │  control  │
                   │        energy routers       │           └──────────┘
                   └──────────────────┘
                              │
                              ▼           No
                         ◇ stable or not ◇────────────────►
                              │
                        ····· Yes ·····
                              ▼
                   ┌──────────────────┐
                   │ guarantee electromagnetism │
                   │   time domain of a single │
                   │ dual energy flow multi-port │
                   │ clustered energy router to │
                   │         be stable         │
                   └──────────────────┘
                              │
                              ▼
                          ( End )
```

FIG. 2

FIG. 3

FIG. 4

FIG. 5

FIG. 6

FIG. 7

FIG. 8

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109830995 A

- CN 106452136 A